# EUROPÄISCHE PATENTSCHRIFT

(11) **EP 3 589 860 B1**
(45) Veröffentlichungstag und Bekanntmachung des Hinweises auf die Patenterteilung: **07.02.2024**
(21) Anmeldenummer: 18709967.6
(22) Anmeldetag: 28.02.2018
(51) Int. Cl.: F16F 1/12, B65D 57/00, B65D 67/00

(54) **BEHÄLTNIS MIT EINER VIELZAHL VON DARIN VERHAKUNGSFREI ANGEORDNETEN FEDERANORDNUNGEN.**
CONTAINER WITH A PLURALITY OF SPRING ARRANGEMENTS ARRANGED THEREIN WITHOUT ENTANGLEMENT.
RÉCIPIENT COMPORTANT UNE PLURALITÉ DE RESSORTS DISPOSÉS DE MANIÈRE À NE PAS S'ACCROCHER.

(30) Priorität: 28.02.2017 DE 102017104111
(43) Veröffentlichungstag der Anmeldung: 08.01.2020
(73) Patentinhaber: Scherdel Innotec Forschungs- Und Entwicklungs GmbH, 95615 Marktredwitz (DE)
(72) Erfinder: GRASSOLD, Achim, 95692 Konnersreuth (DE); FOUCART, Patrick, 62150 Rebreuve Ranchicout (FR)
(74) Vertreter: Schmitt-Nilson Schraud Waibel Wohlfrom Patentanwälte Partnerschaft mbB
(86) Internationale Anmeldenummer: PCT/EP2018/054895
(87) Internationale Veröffentlichungsnummer: WO 2018/158296

(56) Entgegenhaltungen:
- EP-A1- 0 216 476
- EP-A1- 1 612 449
- WO-A1-90/06453
- DE-U- 7 340 029
- FR-E- 15 245
- US-A- 2 308 713
- US-A1- 2015 158 479

## Beschreibung

Die vorliegende Erfindung betrifft ein Behältnis mit einer Vielzahl von darin verhakungsfrei angeordneten Federanordnungen, mit jeweils einer Schraubenfeder und einem innerhalb der Windungen der Schraubenfeder verlaufenden Verhakungsschutz-Element. Die Erfindung betrifft ferner Verfahren zum Einbringen eines Verhakungsschutz-Elements in einen Innenraum einer Schraubenfeder für ein Behältnis mit einer Vielzahl von darin verhakungsfrei angeordneten Federanordnungen, und Verfahren zum Entfernen des Verhakungsschutz-Elements aus dem Innenraum der Schraubenfeder für ein Behältnis mit einer Vielzahl von darin verhakungsfrei angeordneten Federanordnungen.

Bei der Herstellung von Schraubenfedern wird häufig eine Vielzahl von Schraubenfedern in ein gemeinsames Behältnis ausgegeben, und in diesem Behältnis werden die Schraubenfedern zu ihrem Bestimmungsort transportiert. Häufig ergibt sich dabei das Problem, dass Schraubenfedern miteinander verhaken und am Bestimmungsort nur schwierig voneinander getrennt werden können. Manchmal ist eine beschädigungsfreie Trennung von miteinander verhakten Schraubenfedern gar nicht möglich.

Aus der DE 38 09 494 A1 ist bekannt, Schraubenfedern bei der Herstellung lose auf einem Draht aufzureihen und so als "Federkette" in einem Behälter abzulegen. Bei der Weiterverarbeitung wird ein Ende dieser Federkette in ein Vereinzelungsgerät eingelegt, welches den Mitteldraht entfernt und die Federn einzeln ausgibt. Das Aufreihen mehrerer Schraubenfedern bei der Herstellung auf einen Draht ist aufwändig und wird nur selten praktiziert.

Die US 2015 / 158479 A1 offenbart einen federartigen Eisenbahnschlauchträger, der eine Federanordnung zur hängenden Halterung eines Luftbremsenschlauchs umfasst. Diese Federanordnung ist oben über eine Kette und über eine Kopplungsverbindung an einer Eisenbahnkupplung aufgehängt. Unten an der Federanordnung ist eine Hängeklammer eingehängt, die den Luftbremsenschlauch hält.

Aus der EP 0 216 476 A1 ist Verfahren und eine Vorrichtung bekannt, die in einer kupplungsgetriebenen Plattenanordnung verwendet werden. In den Figuren 14 und 15 ist eine Dämpfungsfeder für eine Kupplung gezeigt, bei der von beiden Seiten einer Schraubenfeder ein Stift und ein konisches Gewicht in den Innenraum der Schraubenfeder eingebracht sind, die mit entsprechenden Flanschenden an den jeweiligen Endwindungen der Schraubenfeder anliegen.

Die US 2 308 713 A zeigt ein Versandelement, nämlich eine zu versendende Feder mit einem Kartonrohr, das einen etwas geringeren Außendurchmesser als der Innendurchmesser der Windungen der Feder hat. Die Enden des Rohrs sind verformt, um flache Abschnitte bereitzustellen, die länger als der Innendurchmesser der Feder ist. Die Feder ist auf das Kartonrohr aufbracht worden.

Es ist daher eine Aufgabe der vorliegenden Erfindung, ein Verhaken von Schraubenfedern zuverlässig zu verhindern. Hierfür sollen ein Behältnis mit einer Vielzahl von darin verhakungsfrei angeordneten Federanordnungen und entsprechende, einfach und zuverlässig durchführbare Verfahren bereitgestellt werden.

Diese Aufgabe wird durch ein Behältnis mit einer Vielzahl von darin verhakungsfrei angeordneten Federanordnungen gemäß den unabhängigen Patentansprüchen 1 und 6, durch Verfahren zum Einbringen eines Verhakungsschutz-Bügels in einen Innenraum einer Schraubenfeder gemäß den Patentansprüchen 11 und 13, und durch Verfahren zum Entfernen des Verhakungsschutz-Bügels bzw. des Verhakungsschutz-Stifts aus dem Innenraum einer Schraubenfeder bei einer Federanordnung für ein Behältnis mit einer Vielzahl von darin verhakungsfrei angeordneten Federanordnungen gemäß den unabhängigen Patentansprüchen 12 und 14 gelöst. Vorteilhafte Weiterbildungen ergeben sich aus den abhängigen Ansprüchen.

Eine erfindungsgemäße Federanordnung weist Folgendes auf: Eine Schraubenfeder mit einem durch deren Federwindungen gebildeten Innenraum; und ein Verhakungsschutz-Element zum Schutz vor einem Verhaken der Federanordnung, insbesondere mit wenigstens einer weiteren Federanordnung oder mit wenigstens einer anderen Schraubenfeder; wobei das Verhakungsschutz-Element teilweise in dem durch die Federwindungen gebildeten Innenraum angeordnet ist und sich in Längsrichtung durch wenigstens einen Teil des Innenraums erstreckt; und wobei das Verhakungsschutz-Element als separat von der Schraubenfeder ausgebildeter Verhakungsschutz-Bügel, insbesondere Verhakungsschutz-Drahtbügel, ausgebildet ist, der in dem Innenraum klemmend gehaltert ist; oder wobei das Verhakungsschutz-Element als separat von der Schraubenfeder ausgebildeter Verhakungsschutz-Stift, insbesondere Verhakungsschutz-Kunststoffstift, ausgebildet ist, mit einem vorderen Verliersicherungs-Ende und mit einem hinteren Anschlagsende.

Jeweils versehen mit dem erfindungsgemäßen Verhakungsschutz-Element, können mehrere Schraubenfedern in einem gemeinsamen erfindungsgemäßen Behälter transportiert werden, ohne sich zu verhaken. Das Verhakungsschutz-Element verhindert ein Eindringen der Windungen von angrenzenden Schraubenfedern in den Innenraum von benachbarten Schraubenfedern. Die Windungen von benachbarten Schraubenfedern stoßen dabei am durch den Innenraum der Schraubenfeder verlaufenden Verhakungsschutz-Element an. Dadurch wird wirksam vermieden, dass die Windungen von Schraubenfedern in Eingriff miteinander kommen und dadurch Schraubenfedern miteinander verhaken.

Somit können bei der Herstellung eine Vielzahl von erfindungsgemäßen Federanordnungen gemeinsam in ein erfindungsgemäßes Behältnis ausgegeben und in diesem zu deren Bestimmungsort transportiert werden, ohne dass diese miteinander verhaken.

Es ist von Vorteil, wenn die erfindungsgemäßen Verhakungsschutz-Elemente gleich bei der Herstellung der Schraubenfedern jeweils in den durch die Federwindungen gebildeten Innenraum der Schraubenfedern eingebracht werden, noch bevor die Feder Anordnungen in das gemeinsame Behältnis gelangen können.

Dadurch, dass die Verhakungsschutz-Elemente separat von den jeweiligen Schraubenfedern ausgebildet sind, entfällt eine mechanische Durchtrennung, die bei einer denkbaren einstückigen Ausbildung von Verhakungsschutz-Elementen erforderlich ist. Scharfe Enden und der Span, die bei einer solchen mechanischen Durchtrennung die Folge sein könnten, können zuverlässig vermieden werden.

Sowohl bei der Ausbildung des Verhakungsschutz-Elements als Verhakungsschutzbügel als auch bei der Ausbildung des Verhakungsschutz-Elements als Verhakungsschutzstift ist dieser zuverlässig klemmend und/oder verliersicher gegenüber der Schraubenfeder angeordnet und kann automatisiert in die Schraubenfeder eingebracht und wieder von dieser gelöst werden.

Des Weiteren können die erfindungsgemäßen Verhakungsschutz-Elemente beinahe beliebig oft wiederverwendet werden.

Erfindungsgemäße Federanordnungen eignen sich sehr gut für die Fertigung von großen Stückzahlen von Schraubenfedern und für ein automatisches Handling sowohl auf der Seite der Federherstellung als auch auf Kundenseite, also beim Einbringen der Schraubenfedern in ihre bestimmungsgemäße Anwendungsposition.

Des Weiteren eignen sich erfindungsgemäße Federanordnungen als Schüttgut und für einen automatisierten Prozessdurchlauf.

Die Verhakungsschutz-Bügel-Lösung, bei welcher der Verhakungsschutz-Bügel aus einem Metall ist, bietet den weiteren Vorteil, dass dieser auch bei Wärmebehandlungsvorgängen in der Schraubenfeder verbleiben kann.

Bei der Verhakungsschutz-Bügel-Lösung kann der Verhakungsschutz-Bügel aus einem Drahtmaterial mit einem beliebigen Querschnitt, insbesondere einem runden, ovalen, oder multi-arc Querschnitt, sein. Ebenso kann der Verhakungsschutz-Bügel auch aus einem Bandmaterial hergestellt sein.

Die Verhakungsschutzelemente, also sowohl die Verhakungsschutz-Bügel, als auch die Verhakungsschutz-Stifte, können auch bei Reinigungsprozessen während der Herstellung in der Schraubenfeder verbleiben.

Insbesondere bei der Verhakungsschutz-Stift-Lösung kann die Feder axial vorgespannt auf dem Verhakungsschutz-Stift, insbesondere zwischen vorderem Verliersicherungs-Ende und hinterem Anschlagsende, sitzen.

Gemäß der Erfindung weist der Verhakungsschutz-Bügel wenigstens zwei Bügelschenkel und eine Bügelspange auf, welche die wenigstens zwei Bügelschenkel integral miteinander verbindet.

Ein solcher Verhakungsschutz-Bügel ist einfach aufgebaut und einfach und kostengünstig herstellbar. Gleichzeitig kann er auf einfache Weise in den Innenraum einer Schraubenfeder eingebracht werden, und verhindert so besonders Wirksam ein Verhaken der Schraubenfeder mit anderen Schraubenfedern oder Federanordnungen. Ebenso kann der Verhakungsschutz-Bügel auf einfache Weise wieder aus dem Innenraum der Schraubenfeder entfernt werden, so dass die Schrauben in ihre eigentliche Bestimmungsposition gebracht werden kann.

Die Bügelschenkel können zudem jeweils eine voneinander weg gerichtete Nase oder Ausbuchtung aufweisen, für einen verbesserten Halt der Bügelschenkel an der Schraubenfeder, z.B. durch ein Eingreifen der Nase oder Ausbuchtung zwischen Windungen der Schraubenfeder.

Wenigstens einer der Bügelschenkel des Verhakungsschutz-Bügels kann wenigstens mit einer Nase, mit wenigstens einer Sicke und/oder mit wenigstens einer Stufe ausgebildet sein. Dadurch wird eine bessere und verrutschsicherere und/oder verliersichere Positionierung des Verhakungsschutz-Bügels gegenüber der Schraubenfeder erreicht. Gleichzeitig wird eine Verformung der Windungen der Schraubenfeder verhindert. Schließlich ist bei einer derartigen Ausbildung der Bügelschenkel eine vorteilhafte Abzugskraft gegeben, bei gleichzeitig einfachem Aufbau des Verhakungsschutz-Bügels. Die wenigstens eine Nase, Sicke oder Stufe kann dabei insbesondere in dem Zwischenraum zwischen zwei benachbarten Federwindungen angeordnet sein, was eine noch bessere und verrutschsicherere Positionierung des Verhakungsschutz-Bügels gegenüber der Schraubenfeder bewirkt.

Wenn der Verhakungsschutz-Bügel ferner insbesondere nach außen, bezogen auf die Symmetrieachse des Verhakungsschutz-Bügels, gerichtete Bügelenden aufweist, so kann ein zu weites Einbringen des Verhakungsschutz-Bügels in den Innenraum der Feder auf einfache Weise verhindert werden. Des Weiteren erleichtern solche Bügelenden das automatisierte Einbringen und Entfernen des Verhakungsschutz-Bügels. Des Weiteren bilden diese einen Anschlag und bestimmen somit die maximale Einschubtiefe des Verhakungsschutz-Bügels in den Innenraum der Schraubenfeder.

Die Bügelenden können beispielsweise als Angreifpunkt zum Zusammendrücken der Bügelschenkel dienen. Zum Zusammendrücken können Klemmbacken zum Einsatz kommen, die beispielsweise Vertiefungen zum abrutschsicheren Aufnehmen der Bügelenden aufweisen.

Gemäß der Erfindung weist der Verhakungsschutz-Bügel ferner ösenförmige, insbesondere ösenförmig gebogene Bügelenden auf. Dadurch wird ein Verhaken eines solchen Verhakungsschutz-Bügels und einer Federanordnung mit einem solchen Verhakungsschutz-Bügel gegenüber anderen Verhakungsschutz-Bügeln, Federanordnungen und Schraubenfedern vermieden. Zudem wird auch die Gefahr reduziert, dass durch weg stehende, ggf. spitze Federdrahtenden der Verhakungsschutz-Bügel Material, das zum Transport von solchen Federanordnungen verwendet wird, z. B. Transportbeutel, beschädigt, insbesondere durchstochen wird/werden. Ebenso wird ein Abrieb in Transportbeuteln verhindert, und somit wird die Entstehung von Partikeln beim Transport minimiert.

Gemäß einer weiteren Ausführungsform ist der Verhakungsschutz-Bügel so in dem durch die Federwindungen gebildeten Innenraum der Schraubenfeder klemmend gehaltert, dass die Symmetrieachse der Schraubenfeder und die Symmetrieachse des Verhakungsschutz-Bügels eine gemeinsame Achse bilden.

Dadurch ist der Verhakungsschutz-Bügel zentriert in der Schraubenfeder angeordnet, was zu einer besonders guten Klemmkraftverteilung und somit sowohl zu einem einfachen Einbringen als auch zu einem einfachen Lösen des Verhakungsschutz-Bügels beiträgt.

Gemäß der Erfindung ist der Verhakungsschutz-Bügel so in dem durch die Federwindungen gebildeten Innenraum der Schraubenfeder klemmend gehaltert, dass die wenigstens zwei Bügelschenkel an einer Mehrzahl der Innenseiten von Federwindungen anliegen und dass eine nach außen gerichtete Klemmkraft auf die Innenseiten der Federwindungen einwirkt.

Dadurch, dass die Klemmkraft auf eine Vielzahl von Federwindungen einwirkt, ergibt sich wiederum eine besonders homogene Klemmkraftverteilung, was wiederum sowohl zu einem einfachen Einbringen als auch zu einem einfachen Lösen des Verhakungsschutz-Bügels beiträgt.

Gemäß einer weiteren Ausführungsform ist der Verhakungsschutz-Bügel so in dem durch die Federwindungen gebildeten Innenraum der Schraubenfeder klemmend gehaltert, dass die Bügelenden, bezogen auf die Symmetrieachse der Schraubenfeder, an einem axialen Ende der Schraubenfeder in radialer Richtung nach außen wegstehen.

Dadurch können die Federenden gut gegriffen und für ein Einbringen in und ein Lösen des Verhakungsschutz-Bügels aus dem Innenraum der Schraubenfeder zusammengedrückt werden. Gleichzeitig bilden sie so einen Anschlag für die Schraubenfeder und definieren die maximale Einschubtiefe.

Gemäß der Erfindung weist der Verhakungsschutz-Bügel zwei Bügelschenkel mit jeweiligem Bügelende und eine Bügelspange auf, welche die zwei Bügelschenkel integral miteinander verbindet. Der Verhakungsschutz-Bügel ist gemäß der der Erfindungso ausgebildet, dass die Bügelspange die zwei Bügelschenkel in der nicht in den durch die Federwindungen gebildeten Innenraum eingebrachten Position soweit nach außen vorspannt, dass der Abstand zwischen den an den nach außen wegstehenden Bügelenden angrenzenden Bereichen der Bügelschenkel größer ist als der Innendurchmesser der Schraubenfeder; und/oder dass, durch eine auf die nach außen wegstehenden Bügelenden in radialer Richtung einwirkende Zusammendrückkraft zum Einbringen des Verhakungsschutz-Bügels in den Innenraum und zum Entfernen des Verhakungsschutz-Bügels aus dem Innenraum, die zwei Bügelschenkel so weit in radialer Richtung zusammendrückbar sind, dass der Abstand zwischen den an den nach außen wegstehenden Bügelenden angrenzenden Bereichen der Bügelschenkel kleiner ist als der Innendurchmesser der Schraubenfeder.

Ein solcher Verhakungsschutz-Bügel mit zwei Bügelschenkeln verhindert sehr zuverlässig ein Verhaken der Federanordnung mit anderen Schraubenfedern oder Federanordnungen. Für ein Einbringen des Verhakungsschutz-Bügels werden die Bügelschenkel durch eine auf die Bügelenden in radialer Richtung zueinander einwirkende Zusammendrückkraft zusammen gedrückt, was einfach und automatisiert realisierbar ist.

Gemäß einer weiteren Ausführungsform erstreckt sich der Verhakungsschutz-Bügel so weit in den durch die Federwindungen gebildeten Innenraum der Schraubenfeder, dass die nach außen wegstehenden Bügelenden an den ersten Windungen der Schraubenfeder anliegen, und/oder dass die Bügelspange radial innerhalb der letzten Windung oder einer der letzten Windungen der Schraubenfeder angeordnet ist.

Somit erstreckt sich der Verhakungs-Schutzbügel quasi entlang der gesamten axialen Erstreckung der Federanordnung innerhalb des Innenraums der Schraubenfeder und verhindert so sehr wirksam und über die gesamte axiale Länge ein ungewolltes Verhaken mit anderen Schraubenfedern und Federanordnungen.

Für die Funktion des Verhakungsschutzes müssen die Bügelenden nicht zwingend an der ersten Windung anliegen. Der Drahtbügel wird in axialer Richtung durch die Vorspannung gegenüber der Innenseite der Federwindungen gehalten.

Gemäß einer weiteren Ausführungsform befindet sich die Bügelspange innerhalb des Windungskörpers. In einer dazu alternativen Ausführungsform kann die Bügelspange auch ein Stück weit über das Ende des Windungskörpers überstehen bzw. aus diesem herausstehen.

Gemäß einer weiteren Ausführungsform kann der Verhakungsschutz-Bügel auch nach innen geformten Bügelenden, in Umfangsrichtung der Feder angeformte Bügelenden oder Bügelenden ganz ohne Biegung aufweisen.

Gemäß einer weiteren Ausführungsform weist der Verhakungsschutz-Stift einen Stiftkörper auf, dessen Durchmesser kleiner ist als der Innendurchmesser der Schraubenfeder und der eine in axialer Richtung durch den Stiftkörper verlaufende Längsöffnung hat. Ein solcher Stiftkörper füllt einen Großteil des Innenraums der Schraubenfeder aus und verhindert so auf zuverlässige Weise ein Verhaken der Federanordnung mit anderen Schraubenfedern und anderen Federanordnungen.

Gemäß einer weiteren Ausführungsform ist der Stiftkörper rohrförmig ausgebildet. Wenn der Stiftkörper rohrförmig ausgebildet ist, kann ein Betätigungsstift durch den Stiftkörper geführt werden, mittels dessen das nachfolgend im Einzelnen erläuterte Verliersicherungs-Ende betätigt werden kann.

Gemäß einer weiteren Ausführungsform ist das vordere Verliersicherungs-Ende durch die Längsöffnung des Stiftkörpers betätigbar ausgebildet.

Gemäß einer weiteren Ausführungsform ist das hintere Anschlagsende als integral mit dem Stiftkörper ausgebildeter, verbreiterter Einschubtiefe-Begrenzungs-Kragen ausgebildet ist, dessen Durchmesser größer ist als der Innendurchmesser der Schraubenfeder.

Durch den verbreiterten Einschubtiefe-Begrenzungs-Kragen kann somit ein zu tiefes Einbringen des Verhakungsschutz-Stifts in den Innenraum der Schraubenfeder zuverlässig verhindert werden. Der Einschubtiefe-Begrenzungs-Kragen definiert die maximale Einschubposition des Verhakungsschutz-Stift durch Anschlagen an die hinterste Federwindung.

Gemäß einer weiteren Ausführungsform ist der Durchmesser des vorderen Verliersicherungs-Endes in unbetätigtem Zustand größer als der Innendurchmesser der Schraubenfeder.

Gemäß einer weiteren Ausführungsform ist der Durchmesser des vorderen Verliersicherungs-Endes, insbesondere durch Betätigung mit einem durch die Längsöffnung des Stiftkörpers eingeschobenen Betätigungsstift veränderbar.

Gemäß einer weiteren Ausführungsform ist das vordere Verliersicherungs-Ende durch einen durch die Längsöffnung des Stiftkörpers eingeschobenen Betätigungsstift oder durch ein durch die Längsöffnung des Stiftkörpers eingeschobenes Betätigungsrohr so betätigbar, dass sich der Durchmesser des vorderen Verliersicherungs-Endes so verkleinert, dass er kleiner ist als der Innendurchmesser der Schraubenfeder.

Dadurch kann das vordere Verliersicherungs-Ende durch Betätigen mit dem Betätigungsstift in eine Einschiebeposition gebracht werden, in welcher der Durchmesser des vorderen Verliersicherungs-Endes kleiner ist als der Innendurchmesser der Schraubenfeder. In unbetätigtem Zustand des vorderen Verliersicherungs-Endes hat dieses einen größeren Durchmesser als der Innendurchmesser der Schraubenfeder, und dementsprechend ist der Verhakungsschutz-Stift mittels des vorderen Verliersicherungs-Endes und mittels des hinteren Einschubtiefe-Begrenzungs-Kragens zuverlässig und verliersicher gegenüber der Schraubenfeder gehaltert.

Gemäß einer weiteren Ausführungsform weist das vordere Verliersicherungs-Ende wenigstens zwei Verliersicherungsarme auf, die an dem vorderen Ende des Stiftkörpers ansetzen und insbesondere integral mit diesem ausgebildet sind.

Gemäß einer weiteren Ausführungsform weisen die wenigstens zwei Verliersicherungsarme jeweils wenigstens einen radial nach außen gewölbten Bauchbereich und ein vorderes Zangenende auf, und/oder die wenigstens zwei Verliersicherungsarme sind biegbar ausgebildet, insbesondere derart biegbar ausgebildet, dass bei einer axial nach vorne gerichteten Betätigung der vorderen Zangenenden der Verliersicherungsarme durch einen durch die Längsöffnung des Stiftkörpers eingeschobenen Betätigungsstift die Bauchbereiche der Verliersicherungsarme unter Verringerung des Durchmessers der Bauchbereiche gestreckt werden; wobei sich der Durchmesser der Bauchbereiche dabei insbesondere von einem größeren Durchmesser, der größer als der Innendurchmesser der Schraubenfeder ist, zu einem kleineren Durchmesser, der kleiner als der Innendurchmesser der Schraubenfeder ist, verringert.

Dies stellt eine Ausführungsform dar, die einfach realisierbar und herstellbar ist, die den Verhakungsschutz-Stift zuverlässig gegenüber der Schraubenfeder haltert und die es gleichzeitig ermöglicht, den Verhakungsschutz-Stift einfach in die Schraubenfeder einzubringen und einfach wieder davon zu lösen.

Gemäß einer weiteren Ausführungsform ist der Stiftkörper des Verhakungsschutz-Stifts in dem durch die Federwindungen gebildeten Innenraum angeordnet, das hintere Anschlagsende liegt an der hintersten Windung der Schraubenfeder an und das vordere Verliersicherungs-Ende, insbesondere die Bauchbereiche der Verliersicherungsarme, ist/sind vor der vordersten Windung der Schraubenfeder angeordnet. Die Bauchbereiche der Verliersicherungsarme können dabei einen Durchmesser einnehmen, der größer als der Innendurchmesser der Schraubenfeder ist.

Bei dieser Ausführungsform wird der Verhakungsschutz-Stift auf einfache Weise und zuverlässig gegenüber der Schraubenfeder gehaltert.

Gemäß einer weiteren Ausführungsform stecken mehrere Federn hintereinander auf einem Verhakungsschutzelement bzw. erstreckt sich ein Verhakungsschutzelement durch zwei oder mehrere Federn.

Ein erfindungsgemäßes Verfahren zum Einbringen eines Verhakungsschutz-Bügels in einen Innenraum einer Schraubenfeder, insbesondere zum Ausbilden einer Federanordnung für ein Behältnis mit einer Vielzahl von darin verhakungsfrei angeordneten Federanordnungen, weist die folgenden Schritte auf: Bereitstellen einer Schraubenfeder mit einem durch deren Federwindungen gebildeten Innenraum; Bereitstellen eines Verhakungsschutz-Bügels mit wenigstens zwei Bügelschenkeln, mit einer Bügelspange, welche die wenigstens zwei Bügelschenkel integral miteinander verbindet, und mit nach außen gerichteten Bügelenden, die an den Enden der Bügelschenkel ansetzen; Zusammendrücken der Bügelenden in radialer Richtung, durch eine auf die Bügelenden in radialer Richtung einwirkende Zusammendrückkraft, so weit, dass der Abstand zwischen den an den nach außen wegstehenden Bügelenden angrenzenden Bereichen der Bügelschenkel kleiner ist als oder gleich ist wie der Innendurchmesser der Schraubenfeder; Einschieben des Verhakungsschutz-Bügels in den Innenraum der Schraubenfeder, insbesondere so weit, dass die nach außen wegstehenden Bügelenden an der ersten Windung der Schraubenfeder anliegen und/oder dass die Bügelspange radial innerhalb der letzten Windung oder einer der letzten Windungen der Schraubenfeder angeordnet ist; und Beenden des Zusammendrückens der Bügelenden.

Mit einem solchen erfindungsgemäßen Verfahren kann ein Verhakungschutz-Bügel einfach und insbesondere automatisiert in den Innenraum einer Schraubenfeder eingebracht und dort zuverlässig klemmend gehalten werden.

Gegebenenfalls müssen für ein automatisiertes Einbringen der Verhakungschutz-Bügel und die Schraubenfeder zuvor in eine definierte Position zueinander gebracht werden.

Der Verhakungsschutz-Bügel kann auch auf einem Dorn axial in die Schraubenfeder eingeschoben werden, wobei die Bügelschenkel während des gesamten Einschiebens unter Vorspannung an der Innenseite der Federwindungen entlanggleiten können.

Für die Funktion des Verhakungsschutzes müssen die Bügelenden nicht zwingend an der ersten Windung anliegen. Der Drahtbügel wird in axialer Richtung durch die Vorspannung gegenüber der Innenseite der Federwindungen gehalten.

Es ist ausreichend, wenn der Verhakungsschutz-Bügel so weit in den Innenraum der Schraubenfeder eingeschoben wird, dass sich die Bügelspange innerhalb des Windungskörpers befindet. In einer dazu alternativen Ausführungsform kann der Verhakungsschutz-Bügel so weit in den Innenraum der Schraubenfeder eingeschoben werden, dass die Bügelspange ein Stück weit über das Ende des Windungskörpers übersteht bzw. aus diesem heraussteht.

Ein erfindungsgemäßes Verfahren zum Entfernen des Verhakungsschutz-Bügels aus dem Innenraum einer Schraubenfeder bei einer Federanordnung für ein Behältnis mit einer Vielzahl von darin verhakungsfrei angeordneten Federanordnungen weist die folgenden Schritte auf: Bereitstellen einer Federanordnung; Zusammendrücken der Bügelenden in radialer Richtung, durch eine auf die Bügelenden in radialer Richtung einwirkende Zusammendrückkraft, so weit, dass der Abstand zwischen den an den nach außen wegstehenden Bügelenden angrenzenden Bereichen der Bügelschenkel kleiner ist als der Innendurchmesser der Schraubenfeder; Entfernen des Verhakungsschutz-Bügels aus dem Innenraum der Schraubenfeder, insbesondere durch Fallenlassen der Schraubenfeder infolge ihrer Schwerkraft; und Beenden des Zusammendrückens der Bügelenden.

Mit einem solchen erfindungsgemäßen Verfahren kann der Verhakungsschutz-Bügel schnell und einfach und insbesondere automatisiert aus dem Innenraum einer Schraubenfeder entfernt werden.

Bei der Endmontage beim Kunden kann die Schraubenfeder, insbesondere um 180° gedreht, durch Schwerkraft vom zusammengedrückten Verhakungsschutz-Bügel in das Endgerät fallen.

Gegebenenfalls müssen Federanordnungen hierfür vereinzelt und in eine bestimmte Ausrichtung gebracht werden, bei der zum Beispiel die Bügelenden zu den Klemmbacken hin ausgerichtet sind.

Ein erfindungsgemäßes Verfahren zum Einbringen eines Verhakungsschutz-Stifts in einen Innenraum einer Schraubenfeder, insbesondere zum Ausbilden einer Federanordnung für ein Behältnis mit einer Vielzahl von darin verhakungsfrei angeordneten Federanordnungen, weist die folgenden Schritte auf: Bereitstellen einer Schraubenfeder mit einem durch deren Federwindungen gebildeten Innenraum; Bereitstellen eines Verhakungsschutz-Stifts mit einem Stiftkörper, dessen Durchmesser kleiner ist als der Innendurchmesser der Schraubenfeder und der eine in axialer Richtung durch den Stiftkörper verlaufende Längsöffnung hat, mit einem vorderen Verliersicherungs-Ende, das durch die Längsöffnung des Stiftkörpers betätigbar ausgebildet ist; und mit einem hinteren Anschlagsende, das als integral mit dem Stiftkörper ausgebildeter, verbreiterter Einschubtiefe-Begrenzungs-Kragen ausgebildet ist, dessen Durchmesser größer ist als der Innendurchmesser der Schraubenfeder; Betätigen des vorderen Verliersicherungs-Endes durch Einschieben eines Betätigungsstifts durch die Längsöffnung des Stiftkörpers so, dass sich der Durchmesser des vorderen Verliersicherungs-Endes so verkleinert, dass er kleiner ist als der Innendurchmesser der Schraubenfeder; Einschieben des Verhakungsschutz-Stifts in den Innenraum der Schraubenfeder oder Fallenlassen der Schraubenfeder auf den Verhakungsschutz-Stift, insbesondere so weit, dass der verbreiterte Einschubtiefe-Begrenzungs-Kragen an der hintersten Windung der Schraubenfeder anliegt und/oder das vordere Verliersicherungs-Ende vor der vordersten Windung der Schraubenfeder angeordnet ist; und Beenden des Betätigens des vorderen Verliersicherungs-Endes durch Herausziehen des Betätigungsstifts aus der Längsöffnung des Stiftkörpers.

Mit einem solchen erfindungsgemäßen Verfahren kann ein Verhakungschutz-Stift einfach und insbesondere automatisiert in den Innenraum einer Schraubenfeder eingebracht und dort zuverlässig gehaltert werden.

Gegebenenfalls müssen für ein automatisiertes Einbringen der Verhakungschutz-Stift und die Schraubenfeder zuvor in eine definierte Position zueinander gebracht bzw. zu einander ausgerichtet werden.

Besonders gut automatisierbar ist ein Verfahren und eine entsprechende Vorrichtung zum Einbringen eines Verhakungsschutz-Stifts in einen Innenraum einer Schraubenfeder, bei denen die Schraubenfeder aus einer Zuführung durch Schwerkraft senkrecht auf den geöffneten Verhakungsschutz-Stift fallen lassen wird.

Ein erfindungsgemäßes Verfahren zum Entfernen des Verhakungsschutz-Stifts aus dem Innenraum einer Schraubenfeder bei einer Federanordnung für ein Behältnis mit einer Vielzahl von darin verhakungsfrei angeordneten Federanordnungen weist die folgenden Schritte auf: Bereitstellen einer Federanordnung; Betätigen des vorderen Verliersicherungs-Endes durch Einschieben eines Betätigungsstifts durch die Längsöffnung des Stiftkörpers so, dass sich der Durchmesser des vorderen Verliersicherungs-Endes so verkleinert, dass er kleiner ist als der Innendurchmesser der Schraubenfeder; und Herausziehen des Verhakungsschutz-Stifts aus den Innenraum der Schraubenfeder.

Mit einem solchen erfindungsgemäßen Verfahren kann der Verhakungsschutz-Stift schnell und einfach und insbesondere automatisiert aus dem Innenraum einer Schraubenfeder entfernt werden.

Bei der Endmontage beim Kunden kann die Schraubenfeder, insbesondere um 180° gedreht, durch Schwerkraft vom geöffneten Verhakungsschutz-Stift in das Endgerät fallen.

Gegebenenfalls müssen Federanordnungen hierfür vereinzelt und in eine bestimmte Ausrichtung gebracht werden, bei der zum Beispiel der Einschubtiefe-Begrenzungskragen in Herauszieh-Richtung des Betätigungsstifts ausgerichtet ist.

Die vorstehend mit Bezug auf die Federanordnung angegebenen Vorteile und Ausführungsformen treffen in verfahrensmäßiger Entsprechung auch auf die Verfahren der Ansprüche 11-14 zu. Diese Vorteile und Ausführungsformen werden zur Vermeidung von Wiederholungen nicht noch einmal angegeben.

Die Erfindung wird im Folgenden anhand von Ausführungsbeispielen unter Bezugnahme auf die beiliegenden Figuren näher erläutert.
Fig. 1 zeigt eine erste Federanordnung gemäß einem ersten Ausführungsbeispiel in einer schematischen perspektivischen Darstellung;
Fig. 2a bis 2d zeigen ein Verfahren zum Einbringen eines Verhakungsschutz-Bügels in einen Innenraum einer Schraubenfeder zum Ausbilden der ersten Federanordnung, aufgegliedert in einzelne Verfahrensschritte;
Fig. 3a bis 3d zeigen ein Verfahren zum Entfernen eines Verhakungsschutz-Bügels aus dem Innenraum einer Schraubenfeder bei einer ersten Federanordnung, aufgegliedert in einzelne Verfahrensschritte;
Fig. 4 zeigt eine nicht erfindungsgemäße zweite Federanordnung gemäß einem zweiten Ausführungsbeispiel in einer schematischen perspektivischen Darstellung;
Fig. 5 zeigt den Verhakungsschutzbügel der nicht erfindungsgemäßen zweiten Federanordnung in einer schematischen perspektivischen Darstellung;
Fig. 6 zeigt eine dritte Federanordnung gemäß einem dritten Ausführungsbeispiel in einer schematischen perspektivischen Darstellung;
Fig. 7a bis 7e zeigen ein Verfahren zum Einbringen eines Verhakungsschutz-Stiftes in einen Innenraum einer Schraubenfeder zum Ausbilden der dritten Federanordnung, aufgegliedert in einzelne Verfahrensschritte;
Fig. 8a bis 8e zeigen ein Verfahren zum Entfernen des Verhakungsschutz-Stiftes aus dem Innenraum der Schraubenfeder bei der dritten Federanordnung, aufgegliedert in einzelne Verfahrensschritte;
Fig. 9a zeigt eine Seitenansicht eines dritten Verhakungsschutz-Bügels;.
Fig. 9b zeigt Seitenansichten von zwei vierten Verhakungsschutz-Bügeln und eine Seitenansicht einer fünften Federanordnung, bei der ein vierter Verhakungsschutz-Bügel in dem Innenraum der ersten Schraubenfeder klemmend gehaltert ist, bei denen die Bügelenden nicht erfindungsgemäß sind;
Fig. 9c zeigt eine Seitenansicht eines fünften Verhakungsschutz-Bügels und eine Seitenansicht einer fünften Federanordnung, bei welcher der fünfte Verhakungsschutz-Bügel in dem Innenraum der ersten Schraubenfeder klemmend gehaltert ist; und
Fig. 10a und 10b zeigen schematische Seitenansichten eines sechsten und siebten Verhakungsschutz-Bügels.

In den Figuren bezeichnen dieselben Bezugszeichen gleiche oder funktionsgleiche Komponenten, soweit nichts Gegenteiliges angegeben ist.

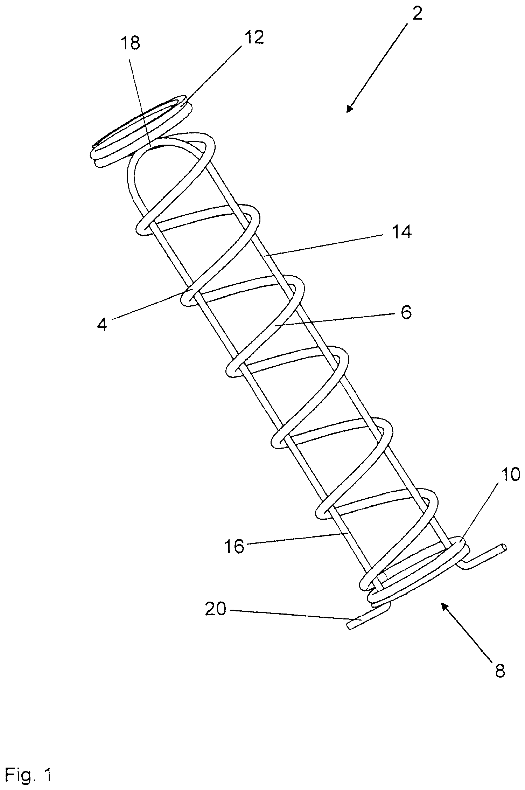

Fig. 1 zeigt eine erste Federanordnung 2 gemäß einem Ausführungsbeispiel in einer schematischen perspektivischen Darstellung.

Die erste Federanordnung 2 weist eine erste Schraubenfeder 4 mit einem durch deren Federwindungen 6 gebildeten Innenraum 8 auf. Die erste Schraubenfeder 4 erstreckt sich im Bild schräg von links oben nach rechts unten. Die Federwindungen 6 gehen an einem Ende der ersten Schraubenfeder 4 in eine untere Endwindung 10 und am oberen Ende in eine obere Endwindung 12 über. Es können ebenso mehrere obere bzw. untere Endwindungen 10, 12 vorgesehen sein, die dann beispielsweise jeweils direkt aneinander anliegen, wodurch besonders stabile Endbereiche der ersten Schraubenfeder 4 gebildet sind in denen die Windungen 10, 12 aneinander anliegen. Zwischen den Endwindungen 10 und 12 haben die Federwindungen 6 eine größere Steigung, und einander benachbarte Federwindungen 6 liegen nicht aneinander an, sondern bilden einen Zwischenraum dazwischen aus. Im Bereich der Endwindungen 10, 12 ist die Steigung von der ersten Schraubenfeder 4 sehr gering, so dass die untere Endwindung 10 und die obere Endwindung 12 jeweils ein etwa ringförmiges Ende der ersten Schraubenfeder 4 bilden.

Ferner weist die erste Federanordnung 2 einen ersten Verhakungsschutz-Bügel 14 auf, der als Verhakungsschutz-Element wirkt. Der erste Verhakungsschutz-Bügel 14 ist als Drahtbügel separat von der Schraubenfeder 4 ausgebildet und weist zwei Bügelschenkel 16 und eine Bügelspange 18 auf, welche die zwei Bügelschenkel 16 integral miteinander verbindet. Im Bild ist die Bügelspange 18 links oben unterhalb der oberen Endwindung 10 erkennbar. Die Bügelschenkel 16 erstrecken sich dann von der Bügelspange 18 im Innenraum 8 der ersten Schraubenfeder 4 verlaufend nach rechts unten. Im Bereich des Austritts der Bügelschenkel 16 aus dem Innenraum 8 der ersten Schraubenfeder 4 sind die Bügelschschenkel 16 bezogen auf die erste Schraubenfeder 4 radial nach außen gebogen, und verlaufen außerhalb des Innenraums 8 der ersten Schraubenfeder 4 als nach außen, bezogen auf die Symmetrieachse des ersten Verhakungsschutz-Bügels 14, gerichtete Bügelenden 20. Die Bügelenden 20 ragen aus der Längsersreckungsrichtung der sie jeweils haltenden Bügelschenkel 16 in einem großen Winkel, bei diesem Ausführungsbeispiel etwa 90 Grad, weg.

Der erste Verhakungsschutz-Bügel 14 ist im Innenraum 8 der ersten Schraubenfeder 4 klemmend gehaltert. Dazu liegen die Bügelschenkel 16 an einer Mehrzahl der Innenseiten der Windungen 6 an und üben eine nach außen gerichtete Klemmkraft auf die Innenseiten der Windungen 6 aus. Die Klemmkraft resultiert aus einem elastischen Vorspannen durch ein Zusammendrücken der Bügelschenkel 16 beim Einführen in die erste Schraubenfeder 4.

Der Verhakungsschutz-Bügel 14 verhindert ein Eindringen der Windungen von angrenzenden Schraubenfedern in den Innenraum 8 der ersten Schraubenfeder 4. Die Windungen von benachbarten Schraubenfedern stoßen dabei am Verhakungsschutz-Element, hier dem Verhakungsschutz-Bügel an. Dadurch wird vermieden, dass die Windungen der Schraubenfedern in Eingriff miteinander kommen und miteinander verhaken. Dies ist insbesondere vorteilhaft, wenn eine Vielzahl von Schraubenfedern in einem gemeinsamen Behältnis angeordnet sind oder werden, wie dies beispielsweise bei der Herstellung von Schraubenfedern der Fall ist, wenn die unmittelbar vorher hergestellten Schraubenfedern in ein gemeinsames Behältnis ausgegeben werden, und wenn die Schraubenfedern in einem gemeinsamen Behältnis transportiert werden, zum Beispiel vom Herstellungsort der Schraubenfedern zum Bestimmungs- oder Einbauort, an dem die Schraubenfedern in ihre bestimmungsgemäße Anwendungsposition gebracht werden.

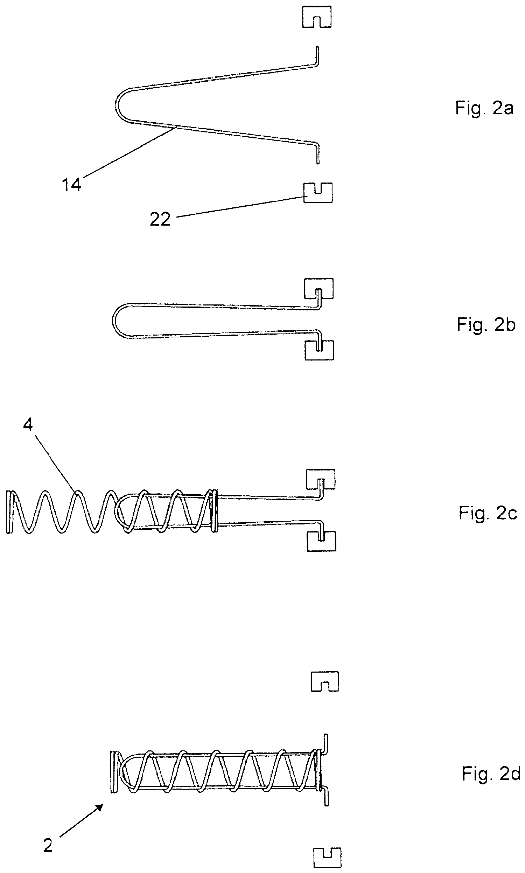

Fig. 2a bis 2d zeigen ein Verfahren zum Einbringen eines Verhakungsschutz-Bügels 14 in einen Innenraum 8 einer Schraubenfeder 4, insbesondere zum Ausbilden der ersten Federanordnung 2, aufgegliedert in einzelne Verfahrensschritte. Der Vereinfachung halber wird bei dieser Verfahrensbeschreibung die erste Federanordnung 2 als Federanordnung 2 und die erste Schraubenfeder 4 als Schraubenfeder 4 bezeichnet.

Das Verfahren weist die nachfolgenden Schritte auf, die mit Fig. 2a bis Fig. 2d bezeichnet und von oben nach unten abfolgend dargestellt sind.

In Fig. 2a ist der Verfahrensschritt des Bereitstellens eines Verhakungsschutz-Bügels 14 mit wenigstens zwei Bügelschenkeln 16, mit einer Bügelspange 18, welche die wenigstens zwei Bügelschenkel 16 integral miteinander verbindet, und mit nach außen gerichteten Bügelenden 20, die an den Enden der Bügelschenkel 16 ansetzen, gezeigt. Der Aufbau des hier eingesetzten Verhakungsschutz-Bügels 14 entspricht dem in Fig. 1 gezeigten, auf die hierzu verwiesen wird. Des Weiteren sind in der Figur 2a Klemmbacken 22 gezeigt und radial außerhalb der Bügelenden 22 angeordnet. Die Klemmbacken 22 sind dazu eingerichtet, die Bügelenden 20 und damit auch die Bügelschenkel 16 zusammen zu drücken. Um ein Abrutschen der Bügelenden 20 an den Klemmbacken 22 zu vermeiden, werden die Bügelenden 20 bei diesem Ausführungbeispiel in vertiefte Zentrierungen 23 in den Klemmbacken 22 eingeführt.

Fig. 2b zeigt den Verfahrensschritt des Zusammendrückens der Bügelenden 20 in radialer Richtung, durch eine auf die Bügelenden 20 in radialer Richtung einwirkende Zusammendrückkraft. Die Bügelenden 20 werden durch die Klemmbacken 22 so weit zusammengedrückt, dass der Abstand zwischen den an den nach außen wegstehenden Bügelenden angrenzenden Bereichen der Bügelschenkel 16 kleiner ist als der Innendurchmesser der Schraubenfeder 4.

Fig. 2c zeigt den Verfahrensschritt des Einschiebens des Verhakungsschutz-Bügels 14 in den Innenraum 8 der Schraubenfeder 4, insbesondere so weit, dass die nach außen wegstehenden Bügelenden 20 an der ersten Windung bzw. untersten Windung 10 der Schraubenfeder anliegen und/oder dass die Bügelspange 18 radial innerhalb der letzten Windung bzw. oberen Endwindung 12 oder einer der letzten Windungen der Schraubenfeder 4 angeordnet ist.

Alternativ dazu kann der Verhakungsschutz-Bügel 14 auch in den Innenraum 8 der Schraubenfeder 4 eingeschoben werden, ohne dass die nach außen wegstehenden Bügelenden 20 an der ersten Windung bzw. untersten Windung 10 der Schraubenfeder anliegen.

Alternativ dazu kann der Verhakungsschutz-Bügel 14 auch so weit in den Innenraum 8 der Schraubenfeder 4 eingeschoben werden, dass die Bügelspange 18 über die letzte Windung bzw. obere Endwindung 12 übersteht.

Fig. 2d zeigt den Verfahrensschritt des Beendens des Zusammendrückens der Bügelenden 20. Dazu sind die Klemmbacken 22 wieder auseinander bewegt worden. Die Federanordnung 2 kann nun abtransportiert bzw. in einem Sammelbehälter verhakungsgeschützt mit anderen Federanordnungen zusammen gelagert werden.

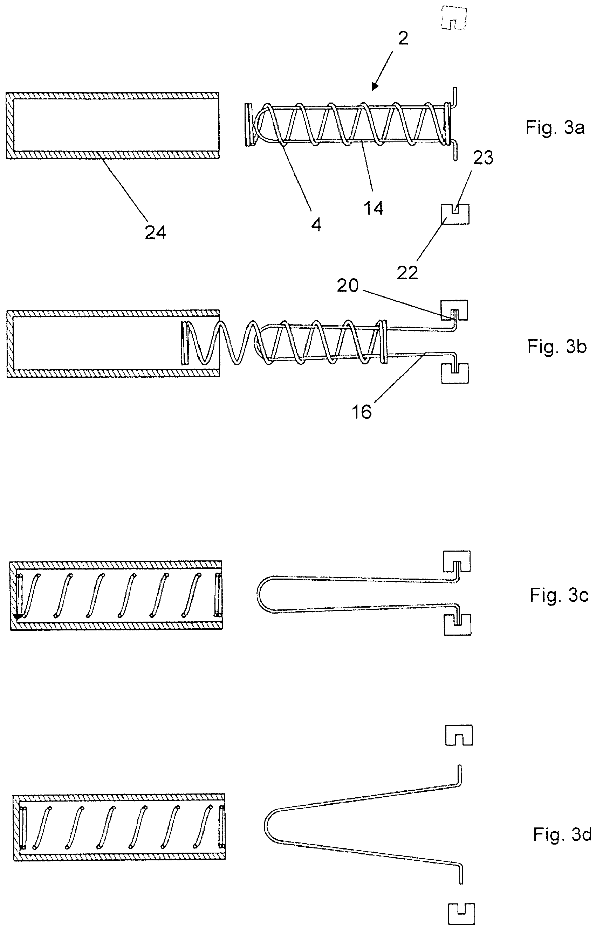

Fig. 3a bis 3d zeigen ein Verfahren zum Entfernen eines Verhakungsschutz-Bügels 14 aus dem Innenraum einer Schraubenfeder 4 bei einer Federanordnung gemäß dem ersten Ausführungsbeispiel, aufgegliedert in einzelne Verfahrensschritte. Der Vereinfachung halber wird bei dieser Verfahrensbeschreibung die erste Federanordnung 2 als Federanordnung 2 und die erste Schraubenfeder 4 als Schraubenfeder 4 bezeichnet.

Fig. 3a zeigt den Verfahrensschritt des Bereitstellens einer Federanordnung nach einem der Ansprüche 1 bis 6. Ferner wird ein Bauteil 24 zur Aufnahme der Schraubenfeder 4 bereitgestellt. Das Bauteil 24 ist dabei in Form einer zylindrischen Hülse mit Boden ausgeführt, deren Öffnung in Richtung der Federanordnung zwei zeigt und deren Symmetrieachse mit der Symmetrieachse der Federanordnung zwei fluchtet.

Radial außerhalb der Bügelenden 20 sind wiederum Klemmbacken 22 angeordnet, die den in Figur 2 beschriebenen Klemmbacken 22 entsprechen.

Fig. 3b zeigt den Verfahrensschritt des Zusammendrückens der Bügelenden 20 in radialer Richtung, durch eine auf die Bügelenden 20 in radialer Richtung einwirkende Zusammendrückkraft, so weit, dass der Abstand zwischen den an den nach außen wegstehenden Bügelenden 20 angrenzenden Bereichen der Bügelschenkel 16 kleiner ist als der Innendurchmesser der Schraubenfeder 4.

Die Schraubenfeder 4 kann nun von dem Verhakungsschutzbügel 14 nach links in das Bauteil 24 bewegt werden. Dies kann durch eine Relativbewegung der Klemmbacken 22 zu dem Bauteil 24 hin erfolgen. Alternativ dazu können die Klemmbacken 22 und das Bauteil 24 in unveränderter Relativposition zueinander verbleiben, und die Bewegung der Schraubenfeder 4 in das Bauteil 24 hinein kann durch ein separates Verschiebungselement erfolgen, was in Figur 3b zwar nicht gezeigt, aber gut nachvollziehbar ist.

Fig. 3c zeigt den Verfahrensschritt des Entfernens des Verhakungsschutz-Bügels 14 aus dem Innenraum 8 der Schraubenfeder 4. Die Schraubenfeder 4 und der Verhakungsschutz-Bügel 14 werden dabei in axialer Richtung auseinander geführt und die Schraubenfeder 4 wird am Bauteil 24 abgelegt.

Fig. 3d zeigt den Verfahrensschritt des Beendens des Zusammendrückens der Bügelenden 20.

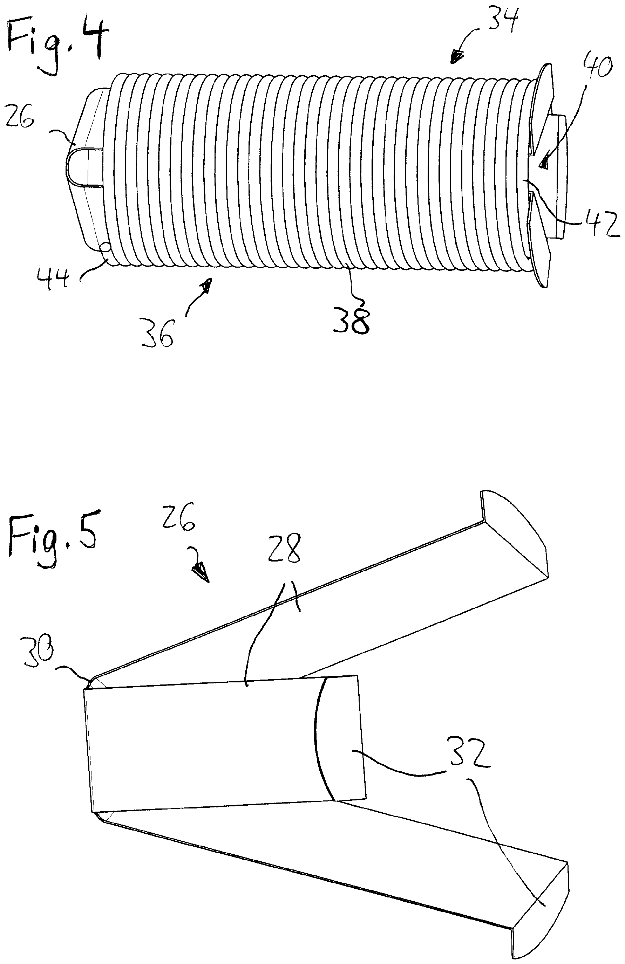

Fig. 4 zeigt eine zweite Federanordnung 34 gemäß einem zweiten Ausführungsbeispiel in einer schematischen perspektivischen Darstellung.

Die zweite Federanordnung 34 weist eine zweite Schraubenfeder 36 mit einem durch deren Federwindungen 38 gebildeten Innenraum 40 auf. Die zweite Schraubenfeder 36 erstreckt sich im Bild von links nach rechts. Die Windungen 38 der zweiten Schraubenfeder 36 gehen im Bild am rechten Ende der zweiten Schraubenfeder 36 in eine untere Endwindung 42 und am oberen Ende in eine obere Endwindung 44 über. Die Steigung der zweiten Schraubenfeder 36 ist sehr gering, so sie in etwa als zylindrischer Körper dargestellt ist. Zwar sind die Windungen der zweiten Schraubenfeder 36 in Figur 4 abstandsfrei zueinander dargestellt, jedoch möge man sich vorstellen, dass jeweils benachbarte Windungen wie bei der ersten Schraubenfeder 4 einen Abstand zueinander ausbilden.

Ferner weist die zweite Federanordnung 34 einen zweiten Verhakungsschutz-Bügel 26 auf, der als Verhakungsschutz-Element wirkt. Beim zweiten Verhakungsschutzbügel 26 sind drei Bügelschenkel 28 über eine Bügelspange 30 miteinander verbunden. Die Bügelschenkel 28 erstrecken sich von von der Bügelspange 30 durch den Innenraum 40 der zweiten Schraubenfeder 36 verlaufend nach rechts. Im Bereich des Austritts der Bügelschenkel 28 aus dem Innenraum 40 der zweiten Schraubenfeder 36 sind die Bügelschenkel 28 bezogen auf die zweite Schraubenfeder 36 radial nach außen gebogen, und verlaufen außerhalb des Innenraums 40 der zweiten Schraubenfeder 36 als nach außen, bezogen auf die Symmetrieachse des Verhakungsschutz-Bügels 14, gerichtete Bügelenden 32.

In der Figur 4 sind die Verhakungschutzbügel 28 so weit in den Innenraum 40 der zweiten Schraubenfeder 36 eingeschoben, dass die nach außen weg stehenden Bügelenden 32 an der unteren Endwindung 42 anliegen. Dabei sind die Bügelschenkel 28 verglichen mit der Ausgangsposition des zweiten Verhakungsschutzbügels 26, die in Figur 5 gezeigt ist, federnd zusammengebogen. Durch die elastische Rückfederkraft der Bügelschenkel 28 drücken diese im Innenraum 40 der zweiten Schraubenfeder 36 gegen die Windungen 38. Dadurch ergibt sich ein Reibschluss zwischen den Bügelschenkeln 28 und den Windungen 38, der den zweiten Verhakungsschutz-Bügel 26 in der zweiten Schraubenfeder 36 hält. Die Einschiebetiefe des Verhakungsschutz-Bügels 26 in den Innenraum 40 der Schraubenfeder 36 wird durch das Anschlagen der Bügelenden 32 an der unteren Endwindung 42 begrenzt.

Fig. 5 zeigt den zweiten Verhakungsschutzbügel 26 der zweiten Federanordnung 34 in einer schematischen perspektivischen Darstellung; im folgenden als zweiter Verhakungsschutzbügel 26 bezeichnet. In diesem entspannten Ausgangszustand des Verhakungsschutzbügels 26 nimmt der Abstand der Bügelschenkel 28 zueinander mit zunehmendem Abstand von der Bügelspange 30 zu. Bügelenden 32 ragen aus der Längsersreckungsrichtung der Bügelschenkel 28 in einem großen Winkel, bei diesem Ausführungsbeispiel etwa 90 Grad, weg. Die Bügelenden 32 sind bei diesem Ausführungsbeispiel als flache Bereiche geformt. Bei diesem Ausführungsbeispiel ist die Materialdicke der Bügelspange 30, der Bügelschenkel 28 und Bügelenden 32 in etwa gleich.

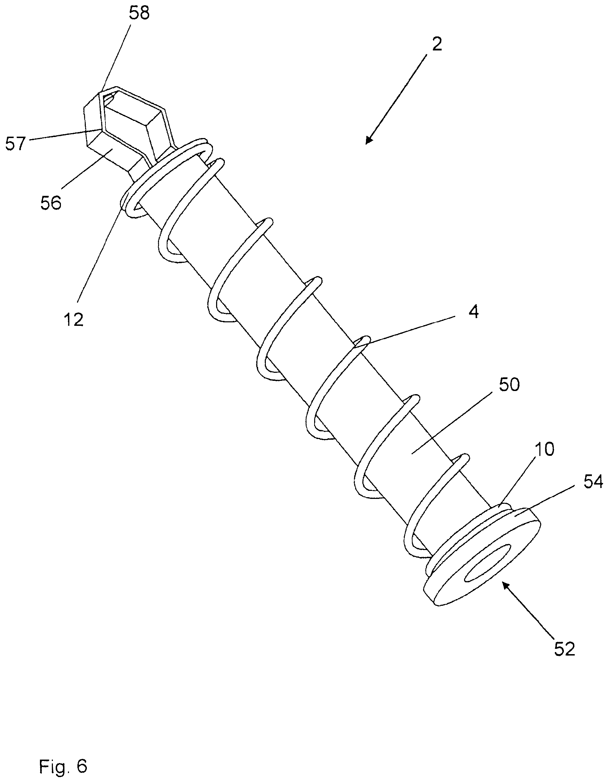

Fig. 6 zeigt eine dritte Federanordnung 46 gemäß einem dritten Ausführungsbeispiel in einer schematischen perspektivischen Darstellung.

Die dritte Federanordnung 46 weist eine Schraubenfeder 4 auf, die im Aufbau der ersten Schraubenfeder 4 gemäß dem ersten Ausführungsbeispiel entspricht, und die hier nicht noch einmal im Detail beschrieben wird.

Ferner weist die dritte Federanordnung 46 als Verhakungsschutz-Element einen separat von der Schraubenfeder ausgebildeten Verhakungsschutz-Stift 48. Der Verhakungsschutz-Stift 48 verläuft durch den von den Federwindungen 6 gebildeten Innenraum 8 längs der Schraubenfeder 4. Dazu weist der Verhakungsschutz-Stift 48 einen Stiftkörper 50 auf, dessen Durchmesser kleiner ist als der Innendurchmesser der Schraubenfeder 4 Der Verhakungsschutz-Stift 48 ist bei diesem Ausführungsbeispiel aus Kunststoff hergestellt, kann aber ebenso aus anderen Materialien, zum Metall, hergestellt sein. Der Stiftkörper 50 weist eine in axialer Richtung durch den Stiftkörper 50 verlaufende Längsöffnung 52 auf.

Der Verhakungsschutz-Stift 48 weist ein hinteres Anschlagsende auf, das als integral mit dem Stiftkörper 50 ausgebildeter, verbreiterter Einschubtiefe-Begrenzungs-Kragen 54 ausgebildet ist, dessen Durchmesser größer ist als der Innendurchmesser der Schraubenfeder 4. Der Einschubtiefe-Begrenzungs-Kragen 54 begrenzt beim Einführen des Verhakungsschutz-Stifts 48 in die Schraubenfeder 4 durch seinen Durchmesser, der größer als der Innendurchmesser der Schraubenfeder 4 ist, das axiale Einschieben des Verhakungsschutz-Stifts 48 in die Schraubenfeder 4. Der Verhakungsschutz-Stift 48 weist ferner ein Verliersicherungs-Ende auf, das bei diesem Ausführungsbeispiel in Form von zwei biegsamen Verliersicherungsarmen 56 ausgebildet ist, die an dem vorderen Ende des Stiftkörpers 50 ansetzen und bei diesem Ausführungsbeispiel integral mit diesem ausgebildet sind. Die Verliersicherungsarme 56 weisen jeweils einen radial nach außen gewölbten Bauchbereich 57 und ein vorderes Zangenende 58 auf.

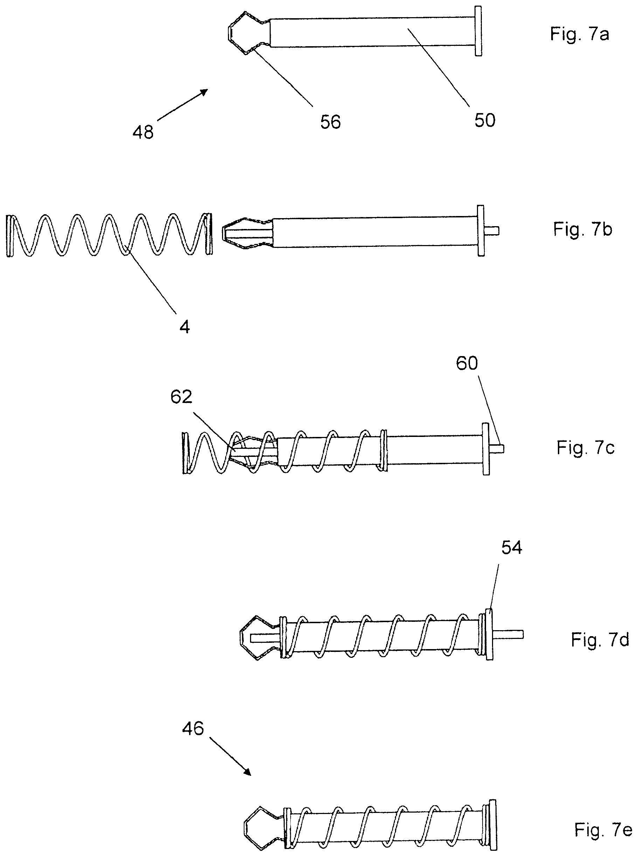

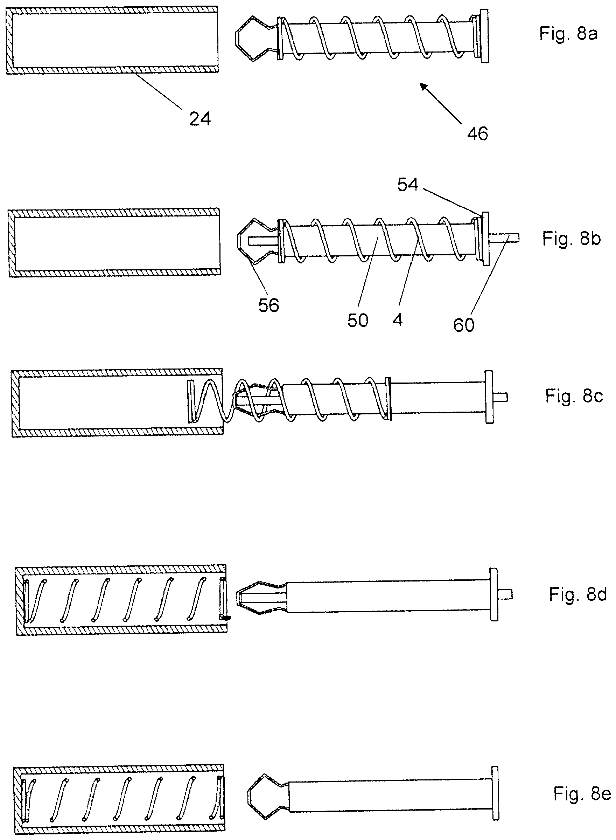

Bei einer axial nach vorne, d.h. von dem Einschubtiefe-Begrenzungs-Kragen 54 weg, gerichteten Betätigung der vorderen Zangenenden 58 der Verliersicherungsarme 56 durch einen durch die Längsöffnung des Stiftkörpers 50 eingeschobenen Betätigungsstift (in Fig. 6 nicht dargestellt, siehe hierzu Fig. 7 und 8) können die Bauchbereiche 57 der Verliersicherungsarme 56 gestreckt werden. Dabei verringert sich der Durchmesser der Bauchbereiche 57, d.h. verringert sich der maximale Abstand der einander gegenüberliegenden Bauchbereiche 57 zueinander, von einem größeren Durchmesser, der größer als der Innendurchmesser der Schraubenfeder 4 ist, zu einem kleineren Durchmesser, der kleiner als der Innendurchmesser der Schraubenfeder 4 ist. Durch die Betätigung mittels des Betätigungsstifts 60 durch die Längsöffnung 52 hindurch kann somit der Durchmesser des Verliersicherungs-Endes des Verhakungsschutz-Stiftes 48 so verkleinert werden, dass das Verliersicherungs-Ende durch den Innenraum 8 der Schraubenfeder 4 hindurch geführt werden kann. In unbetätigtem Zustand federn die Verliersicherungsarme 56 auf, so dass ein in die Schraubenfeder 4 eingeführter Verhakungsschutz-Stift 48 mit den Verliersicherungsarmen 56 und dem Einschubtiefe-Begrenzungs-Kragen 54 an der Schraubenfeder 4 zuverlässig und verliersicher gehaltert wird.

Fig. 7a bis 7e zeigen ein Verfahren zum Einbringen eines Verhakungsschutz-Stiftes 48 in den Innenraum 8 der ersten Schraubenfeder 4 zum Ausbilden der dritten Federanordnung 46, aufgegliedert in einzelne Verfahrensschritte.

Die Abfolge des Verfahrens wird entsprechend der Fig. 7a bis 7e anhand von fünf Verfahrensschritten dargestellt.

Fig. 7a zeigt zeigt den Verfahrensschritt des Bereitstellens eines Verhakungsschutz-Stifts 48, der mit Bezug auf Fig. 6 im Einzelnen beschrieben worden ist.

Fig. 7b zeigt den Verfahrensschritt des Betätigens des vorderen Verliersicherungs-Endes mit den Verliersicherungsarmen 56 durch Einschieben eines Betätigungsstifts 60 durch die Längsöffnung 52 des Stiftkörpers 50 so, dass sich der Durchmesser des vorderen Verliersicherungs-Endes mit den Verliersicherungsarmen 56 so verkleinert, dass er kleiner ist als der Innendurchmesser der Schraubenfeder 4. Durch das Strecken der Verliersicherungsarme 56 in axialer Richtung durch das Andrücken einer Stiftspitze 62 des Betätigungsstiftes 60 gegen die Verliersicherungsarme 56 federn die Bauchbereiche 57 radial ein und das Verliersicherungs-Ende wird im Bereich der Verliersicherungsarme 56 im Durchmesser reduziert. Dadurch kann dann die Schraubenfeder 4 über das Verliersicherungsende mit den Verliersicherungsarmen 56 geschoben werden.

Fig. 7c zeigt den Verfahrensschritt des Einschiebens des Verhakungsschutz-Stifts 48 in den Innenraum der Schraubenfeder 4. Dies geschieht bei diesem Ausführungsbeispiel so weit, bis der verbreiterte Einschubtiefe-Begrenzungs-Kragen 54 an der hintersten Windung der Schraubenfeder 4 anliegt und/oder das vordere Verliersicherungs-Ende mit den Verliersicherungsarmen 56 vor der vordersten Windung der Schraubenfeder 4 angeordnet ist. Dabei kann die Schraubenfeder 4 axial vorgespannt oder lose auf dem Verhakungsschutz-Stift 48, insbesondere zwischen dessen vorderem Verliersicherungs-Ende und dessen hinterem Anschlagsende, aufgebracht werden.

Fig. 7d zeigt die dritte Federanordnung 46 im Verfahrensschritt nach einem Beenden des Betätigens des vorderen Verliersicherungs-Endes beim Herausziehen des Betätigungsstifts 60 aus der Längsöffnung 52 des Stiftkörpers 50. Durch das axiale Herausziehen des Betätigungsstifts 60 weg von dem Zangenende 58 und damit das fehlende axiale Strecken der Vierliersicherungsarme 56 können die Bauchbereiche 57 wieder elastisch radial nach außen zurückfedern. Dadurch vergrößert sich der größte Abstand der Bauchbereiche 57 voneinander, so dass diese nicht mehr durch den Innenraum 8 der Windungen 6 axial verschoben werden können. Damit ist das Verliersicherungs-Ende mit den Verliersicherungsarmen 56 einseitig axial gegenüber der Schraubenfeder 4 fixiert. Da der Stiftkörper 50 mit seinem Einschubtiefe-Begrenzungs-Kragen 54 auf der anderen Seite an der Schraubenfeder 4 anliegt, sind die Schraubenfeder 4 und der Verhakungsschutz-Stift 48 axial zueinander festgelegt.

Fig. 7e zeigt die dritte Federanordnung 46 im fertig montierten Zustand. Der Betätigungsstift 60 wurde nach erfolgter Betätigung der Zangenenden 58 am Verliersicherungsende durch Herausziehen aus der Längsöffnung 52 wieder von der Federanordnung 46 entfernt.

Fig. 8a bis 8e zeigen ein Verfahren zum Entfernen des Verhakungsschutz-Stiftes 48 aus dem Innenraum der ersten Schraubenfeder 4 bei der dritten Federanordnung 46 bei gleichzeitigem Einbringen der Schraubenfeder 4 in deren Einbauposition, aufgegliedert in einzelne Verfahrensschritte. Im Wesentlichen erfolgt das Entfernen des Verhakungsschutz-Stiftes 48 in umgekehrter Reihenfolge wie das mit Bezug auf die Fig. 7a bis 7e beschriebene Einbringen des Verhakungsschutz-Stiftes 48.

Fig. 8a zeigt die dritte Federanordnung 46 in einem Verfahrensschritt des montierten Zustandes.

Fig. 8b zeigt den Verfahrensschritt des Betätigens des vorderen Verliersicherungs-Endes mit den Verliersicherungsarmen 56 durch Einschieben eines Betätigungsstifts 60 durch die Längsöffnung 52 des Stiftkörpers 50 so, dass sich der Durchmesser des vorderen Verliersicherungs-Endes, insbesondere im Bereich der Verliersicherungsarme 56, so verkleinert, dass er kleiner ist als der Innendurchmesser der Schraubenfeder 4 ist.

Fig. 8c zeigt den Verfahrensschritt des Herausziehens des Verhakungsschutz-Stifts 48 aus den Innenraum 8 der Schraubenfeder 4.

Fig. 8d zeigt den Verfahrensschritt des Ablegens der Schraubenfeder 4 an einem Bauteil 24 dar.

Fig. 8e zeigt den Zustand am Ende des letzten Verfahrensschritts, wenn der Betätigungsstift 60 von dem Verhakungsschutz-Stift 48 getrennt worden ist, so dass die Verliersicherungsarme 56 in ihre entspannte radial verbreiterte Ausgangslage zurückgefedert sind.

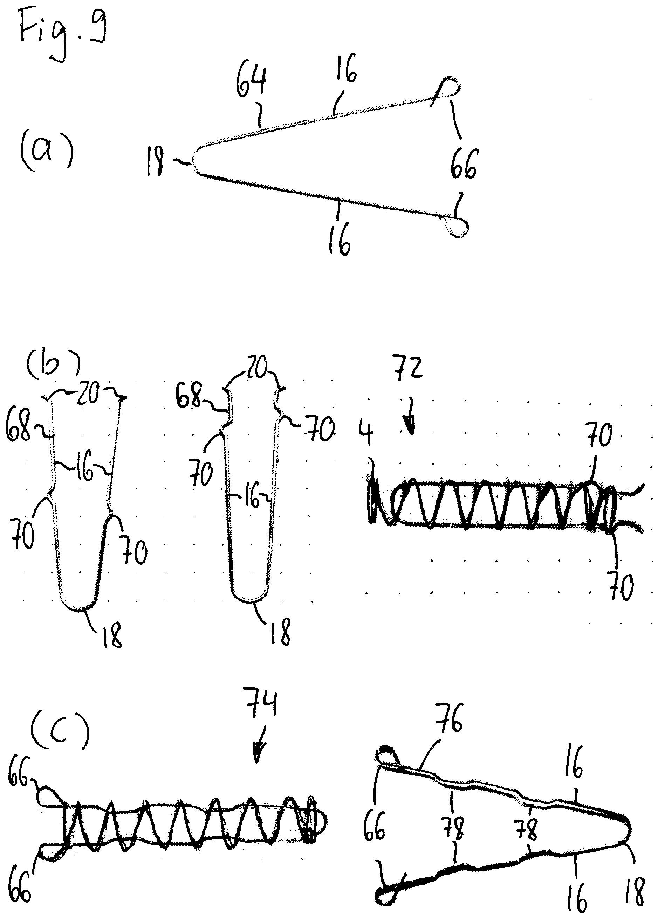

Fig. 9a zeigt eine Seitenansicht eines dritten Verhakungsschutz-Bügels 64.

Fig. 9b zeigt Seitenansichten von zwei vierten Verhakungsschutz-Bügeln 68 und eine Seitenansicht einer fünften Federanordnung 72, bei der ein vierter Verhakungsschutz-Bügel 68 in dem Innenraum der ersten Schraubenfeder 4 klemmend gehaltert ist.

Fig. 9c zeigt eine Seitenansicht eines fünften Verhakungsschutz-Bügels 76 und eine Seitenansicht einer fünften Federanordnung 74, bei welcher der fünfte Verhakungsschutz-Bügel 76 in dem Innenraum der ersten Schraubenfeder 4 klemmend gehaltert ist.

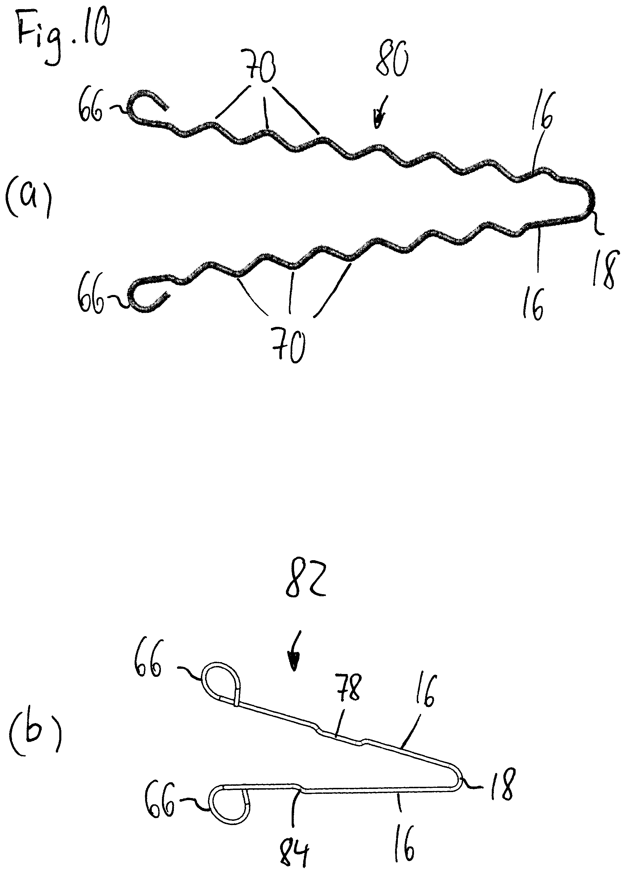

Die Fig. 10a und 10b zeigen schematische Seitenansichten eines sechsten und siebten Verhakungsschutz-Bügels 80, 82.

In den Fig. 9a, 9b, 9c, 10a und 10b sind Varianten des ersten Verhakungsschutz-Bügels 14 aus den Figuren 1, 2 und 3 gezeigt, bei denen die Enden der Bügelschenkel 16 (Figuren 9a, 9c, 10a und 10b) anders ausgeführt sind und bei denen die Bügelschenkel 16 mit Nasen 70 (Figuren 9b und 10a), mit Sicken 78 (Figuren 9c und 10b) sowie mit einer Stufe 84 (Figur 10b) ausgeführt sind.

Der dritte Verhakungsschutz-Bügel 64 aus Figur 9a entspricht dem ersten Verhakungsschutz-Bügel 14 aus den Figuren 1 bis 3, wobei die Bügelenden ösenförmig ausgebildet sind und somit Ösenenden 66 darstellen. Dabei sind die Enden nach außen zu einer Öse gebogen, unter Ausbildung eines Winkels von mindestens 180°, so dass die Federdrahtenden nicht nach außen sondern grob gesprochen in Richtung Bügelspange 18 gerichtet sind. In Figur 9a stehen die Federdrahtenden ein Stück weit über den jeweiligen Bügelschenkel 16 über und bilden eine vollständige Öse aus. Das Federdrahtende und der jeweilige Bügelschenkel 16 schließen dabei einen Winkel ein.

Eine gleiche Endenausbildung mit Ösenenden 66 ist auch bei dem fünften Verhakungsschutz-Bügel 76 gemäß Figur 9c ausgeführt.

Bei den Ösenenden 66 des sechsten Verhakungsschutz-Bügels 80 aus Figur 10a sind die Federdrahtenden der Bügelschenkel 16 ebenfalls so nach außen umgebogen, dass sie sich grob in Richtung Bügelspange 18 erstrecken. Dabei liegen die Federdrahtenden jeweils nach außen beabstandet von den Bügelschenkel-Endabschnitten. Die dadurch ausgebildeten Ösenenden können auch als Hakenenden bezeichnet werden.

Bei dem siebten Verhakungsschutz-Bügel 82 aus Figur 10b sind die Federdrahtenden der Bügelschenkel 16 vollständig nach außen umgebogen, unter Ausbildung eines Winkels von mindestens 270°. Ihre Federdrahtenden liegen, insbesondere unter Ausbildung eines rechten Winkels auf der Höhe der Bügelschenkel-Endabschnitte 16.

Durch derartige Ösenenden wird verhindert, dass die Enden der Bügelschenkel 16 selbst zu Verhakungen mit anderen Federanordnungen, anderen Verhakungsschutz-Bügeln oder anderen Schraubenfedern führen. Ebenso wird eine Beschädigung des Verpackungsmaterials, in welchem solche Verhakungsschutz-Bügel, Schraubenfedern und Federanordnungen transportiert werden, verhindert, z. B. ein Durchstechen von Transportbeuteln. Schließlich wird ein Abrieb in dem Kunststoffbeutel verhindert, und somit wird die Entstehung von Partikeln beim Transport minimiert.

Figur 9b zeigt zwei Varianten eines vierten Verhakungsschutz-Bügels 68. Bei beiden Varianten verfügen beide Bügelschenkel 16 jeweils über eine Nase 70, die in der Ebene, die durch die Bügelschenkel 16 und die Bügelspange 18 aufgespannt wird, liegt und sich jeweils aus der Erstreckungsrichtung der beiden Bügelschenkel 16 ein Stück weit nach außen erstreckt. Dabei sind die beiden Nasen 70 bezogen auf die Länge der Bügelschenkel 16 versetzt angeordnet, und zwar in etwa um die Hälfte einer Windungssteigung der ersten Schraubenfeder 4.

Bei der ersten Variante des vierten Verhakungsschutz-Bügels 68 sind die beiden Nasen 70 etwa in einem mittleren Bereich der Bügelschenkel 16 angeordnet, und bei der zweiten Variante sind die beiden Nasen 70 in einem vorderen Bereich nahe bei den Bügelenden 20 der Bügelschenkel 16 angeordnet.

Bei der vierten Federanordnung 72, bei welcher der vierte Verhakungsschutz-Bügel 68, zweite Variante, von rechts in den Innenraum der ersten Schraubenfeder 4 eingebracht worden ist, wie in Figur 2 beschrieben, sind die beiden Nasen 70 jeweils in dem Zwischenraum zwischen zwei benachbarten Federwindungen der ersten Schraubenfeder 4 angeordnet und stehen somit ein Stück weit aus dem Federinnenraum nach außen. Dadurch wird ein Verrutschen des vierten Verhakungsschutz-Bügels 68 bezüglich der ersten Schraubenfeder 4 zuverlässig vermieden und der vierte Verhakungsschutz-Bügel 68 somit noch positionsgenauer und verrutschsicherer gegenüber der ersten Schraubenfeder 4 positioniert.

Bei dem fünften Verhakungsschutz-Bügel 76 sind bei jedem der beiden Bügelschenkel 16 jeweils zwei Sicken 78 vorgesehen, die in der Ebene, die durch die Bügelschenkel 16 und die Bügelspange 18 aufgespannt wird, liegen und sich aus der Erstreckungsrichtung der Bügelschenkel 16 jeweils ein Stück nach innen erstrecken. Bei der fünften Federanordnung 74 ist der fünfte Verhakungsschutz-Bügel 76, wie in Figur 2 beschrieben, von links in den Innenraum der ersten Schraubenfeder 4 eingebracht worden. Wie bei dem vierten Verhakungsschutz-Bügel 68 mit Nasen 70 wird auch bei dem fünften Verhakungsschutz-Bügel 76 mit Sicken 78 eine zuverlässigere und verrutschsicherere Positionierung des Verhakungsschutz-Bügels 76 im Innenraum der ersten Schraubenfeder 4 erreicht. Zudem wird ein Formschluss erreicht und die Verformung von Federwindungen soll verhindert werden.

Bei dem sechsten Verhakungsschutz-Bügel 80 sind beide Bügelschenkel 16 jeweils mit einer Vielzahl von Nasen 70 ausgeführt. Die Nasen 70 können in der Ebene liegen, die durch die beiden Bügelschenkel 16 und die Bügelspange 18 aufgespannt wird. Alternativ dazu können die Nasen 70 auch in einer oder mehreren anderen Ebenen liegen. Die Nasen 70 erstrecken sich, bezogen auf die Haupterstreckungsrichtung der beiden Bügelschenkel 16, nach außen. Zwischen jeweils benachbarten Nasen 70 können dabei Wellentäler vorgesehen sein, wie dies in Figur 10a gezeigt ist. Der sechste Verhakungsschutz-Bügel 80 wird vorzugsweise so in den Innenraum einer Schraubenfeder eingebracht, dass die Federwindungen jeweils in den Wellentälern zu liegen kommen und die Nasen 70 sich in die Zwischenräume zwischen jeweils zwei benachbarten Federwindungen erstrecken und somit ein Stück weit aus dem Federinnenraum herausstehen.

Mit dem sechsten Verhakungsschutz-Bügel 80 wird eine besonders zuverlässige und verrutschsichere Positionierung des Verhakungsschutz-Bügels 80 gegenüber der entsprechenden Schraubenfeder und somit eine besonders zuverlässige Federanordnung erreicht.

Zudem ist der sechste Verhakungsschutz-Bügel 80 und die damit gebildete Federanordnung auch bezüglich der Abzugskraft vorteilhaft ausgebildet.

Der siebte Verhakungsschutz-Bügel 82 aus Figur 10b hat eine Sicke 78 an seinem ersten Bügelschenkel 16. An seinem zweiten Bügelschenkel 16 ist er mit einer Stufe 84 ausgeführt. Ein solcher siebter Verhakungsschutz-Bügel 82 stellt einen sehr guten Kompromiss zwischen der Einfachheit des Bügels und der Funktion sowie der Abzugskraft dar.

Bezüglich der weiteren Vorteile, der Montage und der Demontage der Verhakungsschutz-Bügel 64, 68, 76, 80 und 82, wie sie in den Figuren 9a, b und c und 10a und b gezeigt worden sind, wird auf das mit Bezug auf die Figuren 1, 2 und 3 Gesagte Bezug genommen. Dies wird zur Vermeidung von Wiederholungen nicht noch einmal erläutert.

### Bezugszeichenliste

2 erste Federanordnung
4 erste Schraubenfeder
6 Windungen
8 Innenraum
10 untere Endwindung
12 obere Endwindung
14 erster Verhakungsschutz-Bügel
16 Bügelschenkel
18 Bügelspange
20 Bügelenden
22 Klemmbacken
23 Zentrierung
24 Bauteil
26 zweiter Verhakungsschutz-Bügel
28 Bügelschenkel
30 Bügelspange
32 Bügelenden
34 zweite Federanordnung
36 zweite Schraubenfeder
38 Windungen
40 Innenraum
42 untere Endwindung
44 obere Endwindung
46 dritte Federanordnung
48 Verhakungsschutz-Stift
50 Stiftkörper
52 Längsöffnung
54 Einschubtiefe-Begrenzungs-Kragen
56 Verliersicherungsarme
57 Bauchbereiche
58 Zangenende
60 Betätigungsstift
62 Stiftspitze
64 dritter Verhakungsschutz-Bügel
66 Ösenenden
68 vierte Verhakungsschutz-Bügel
70 Nasen
72 vierte Federanordnung
74 fünfte Federanordnung
76 fünfter Verhakungsschutz-Bügel
78 Sicken
80 sechster Verhakungsschutz-Bügel
82 siebter Verhakungsschutz-Bügel
84 Stufe

## Patentansprüche

1. Behältnis mit einer Vielzahl von darin verhakungsfrei angeordneten Federanordnungen (2), wobei die Federanordnungen (2) jeweils folgende Merkmale aufweisen:
eine Schraubenfeder (4) mit einem durch deren Federwindungen (6, 38) gebildeten Innenraum; und
ein Verhakungsschutz-Element (14) zum Schutz vor einem Verhaken der Federanordnung (2) mit wenigstens einer weiteren Federanordnung (2) oder mit wenigstens einer anderen Schraubenfeder (4);
wobei das Verhakungsschutz-Element (14) teilweise in dem durch die Federwindungen (6) gebildeten Innenraum angeordnet ist und sich in Längsrichtung durch wenigstens einen Teil des Innenraums erstreckt, ein Eindringen der Windungen von angrenzenden Schraubenfedern (4) in den Innenraum verhindert und Windungen von benachbarten Schraubenfedern (4) am Verhakungsschutz-Element (14) anstoßen, zur Vermeidung, dass die Windungen von benachbarten Schraubenfedern (4) in Eingriff miteinander kommen und dadurch Schraubenfedern (4) miteinander verhaken; und
wobei das Verhakungsschutz-Element (14) als separat von der Schraubenfeder (4) ausgebildeter Verhakungsschutz-Bügel (14), insbesondere Verhakungsschutz-Drahtbügel, ausgebildet ist, der in dem Innenraum klemmend gehaltert ist;
wobei der Verhakungsschutz-Bügel (14) wenigstens zwei Bügelschenkel (16) mit jeweiligem Bügelende (20) und eine Bügelspange (18) aufweist, welche die wenigstens zwei Bügelschenkel (16) integral miteinander verbindet;
wobei der Verhakungsschutz-Bügel (14) so in dem durch die Federwindungen (6) gebildeten Innenraum der Schraubenfeder (4) klemmend gehaltert ist, dass die wenigstens zwei Bügelschenkel (16) an einer Mehrzahl der Innenseiten von Federwindungen (6) anliegen und dass eine nach außen gerichtete Klemmkraft auf die Innenseiten der Federwindungen (6) einwirkt; und
wobei der Verhakungsschutz-Bügel (14) so ausgebildet ist, dass die Bügelspange (18) die zwei Bügelschenkel (16) in der nicht in den durch die Federwindungen (6) gebildeten Innenraum eingebrachten Position so weit nach außen vorspannt, dass der Abstand zwischen den an den nach außen wegstehenden Bügelenden (20) angrenzenden Bereichen der Bügelschenkel (16) größer ist als der Innendurchmesser der Schraubenfeder (4);
**dadurch gekennzeichnet, dass**
die Bügelenden (20) nach außen zu einer Öse (66) gebogen sind, unter Ausbildung eines Winkels von mindestens 180° zu dem jeweiligen Bügelschenkel (16), so dass die Federdrahtenden in Richtung Bügelspange (18) gerichtet sind, zum Verhindern, dass die Bügelenden (16) selbst zu Verhakungen mit anderen Federanordnungen, anderen Verhakungsschutz-Bügeln oder anderen Schraubenfedern führen, und zum Verhindern einer Beschädigung eines Verpackungsmaterials, in welchem solche Verhakungsschutz-Bügel, Schraubenfedern und Federanordnungen transportiert werden.

2. Behältnis mit einer Vielzahl von darin verhakungsfrei angeordneten Federanordnungen (2) nach Anspruch 1,
wobei wenigstens einer der Bügelschenkel (16) des Verhakungsschutz-Bügels (68, 76, 80, 82) mit wenigstens einer Nase (70), mit wenigstens einer Sicke (78), und/oder mit wenigstens einer Stufe (84) ausgebildet ist.

3. Behältnis mit einer Vielzahl von darin verhakungsfrei angeordneten Federanordnungen (2) nach Anspruch 2,
wobei der Verhakungsschutz-Bügel (14) einer Federanordnung (2) so in dem durch die Federwindungen (6) gebildeten Innenraum der Schraubenfeder (4) klemmend gehaltert ist,
dass die Symmetrieachse der Schraubenfeder (4) und die Symmetrieachse eine gemeinsame Achse bilden.

4. Behältnis mit einer Vielzahl von darin verhakungsfrei angeordneten Federanordnungen (2) nach Anspruch 2 oder 3,
wobei der Verhakungsschutz-Bügel (14) einer Federanordnung (2) zwei Bügelschenkel (16) mit jeweiligem Bügelende und eine Bügelspange (18) aufweist, welche die zwei Bügelschenkel (16) integral miteinander verbindet; und
wobei der Verhakungsschutz-Bügel (14) so ausgebildet ist,
dass, durch eine auf die nach außen wegstehenden Bügelenden (20) in radialer Richtung einwirkende Zusammendrückkraft zum Einbringen des Verhakungsschutz-Bügels (14) in den Innenraum und zum Entfernen des Verhakungsschutz-Bügels (14) aus dem Innenraum, die zwei Bügelschenkel (16) soweit in radialer Richtung zusammendrückbar sind, dass der Abstand zwischen den an den nach außen wegstehenden Bügelenden (20) angrenzenden Bereichen der Bügelschenkel (16) kleiner ist als der Innendurchmesser der Schraubenfeder (4).

5. Behältnis mit einer Vielzahl von darin verhakungsfrei angeordneten Federanordnungen (2) nach einem der Ansprüche 2 bis 4,
wobei der Verhakungsschutz-Bügel (14) einer Federanordnung (2) sich so weit in den durch die Federwindungen (6) gebildeten Innenraum der Schraubenfeder (4) erstreckt,
dass die nach außen wegstehenden Bügelenden (20) an der ersten Windung der Schraubenfeder (4) anliegen, und/oder
dass die Bügelspange (18) radial innerhalb der letzten Windung oder einer der letzten Windungen der Schraubenfeder (4) angeordnet ist.

6. Behältnis mit einer Vielzahl von darin verhakungsfrei angeordneten Federanordnungen (46), wobei die Federanordnungen (46) jeweils folgende Merkmale aufweisen:
eine Schraubenfeder (4) mit einem durch deren Federwindungen (6) gebildeten Innenraum; und
ein Verhakungsschutz-Element (48) zum Schutz vor einem Verhaken der Federanordnung (46) mit wenigstens einer weiteren Federanordnung (46) oder mit wenigstens einer anderen Schraubenfeder (4);
wobei das Verhakungsschutz-Element (48) teilweise in dem durch die Federwindungen (6) gebildeten Innenraum angeordnet ist und sich in Längsrichtung durch wenigstens einen Teil des Innenraums erstreckt, ein Eindringen der Windungen von angrenzenden Schraubenfedern (4) in den Innenraum verhindert und Windungen von benachbarten Schraubenfedern (4) am Verhakungsschutz-Element (48) anstoßen, zur Vermeidung, dass die Windungen von benachbarten Schraubenfedern (4) in Eingriff miteinander kommen und dadurch Schraubenfedern (4) miteinander verhaken; **dadurch gekennzeichnet, dass**
das Verhakungsschutz-Element (48) als separat von der Schraubenfeder (4) ausgebildeter Verhakungsschutz-Kunststoffstift, ausgebildet ist, mit einem vorderen Verliersicherungs-Ende und mit einem hinteren Anschlagsende
wobei der Verhakungsschutz-Stift (48) einen Stiftkörper (50) aufweist, dessen Durchmesser kleiner ist als der Innendurchmesser der Schraubenfeder (4) und der eine in axialer Richtung durch den Stiftkörper (50) verlaufende Längsöffnung (52) hat; und wobei der Stiftkörper (50) insbesondere rohrförmig ausgebildet ist;
wobei das vordere Verliersicherungs-Ende durch die Längsöffnung (52) des Stiftkörpers (50) betätigbar ausgebildet ist; und
wobei das hintere Anschlagsende als integral mit dem Stiftkörper (50) ausgebildeter, verbreiterter Einschubtiefe-Begrenzungs-Kragen (54) ausgebildet ist, dessen Durchmesser größer ist als der Innendurchmesser der Schraubenfeder (4).

7. Behältnis mit einer Vielzahl von darin verhakungsfrei angeordneten Federanordnungen (46) nach Anspruch 6,
wobei der Durchmesser des vorderen Verliersicherungs-Endes in unbetätigtem Zustand größer ist als der Innendurchmesser der Schraubenfeder (4); und/oder
wobei der Durchmesser des vorderen Verliersicherungs-Endes, insbesondere durch Betätigung mit einem durch die Längsöffnung (52) des Stiftkörpers (50) eingeschobenen Betätigungsstift (60) veränderbar ist; und/oder
wobei das vordere Verliersicherungs-Ende durch einen durch die Längsöffnung (52) des Stiftkörpers (50) eingeschobenen Betätigungsstift (60) so betätigbar ist, dass sich der Durchmesser des vorderen Verliersicherungs-Endes so verkleinert, dass er kleiner ist als der Innendurchmesser der Schraubenfeder (4).

8. Behältnis mit einer Vielzahl von darin verhakungsfrei angeordneten Federanordnungen (46) nach Anspruch 7,
wobei das vordere Verliersicherungs-Ende wenigstens zwei Verliersicherungsarme (56) aufweist, die an dem vorderen Ende des Stiftkörpers (50) ansetzen und insbesondere integral mit diesem ausgebildet sind; und/oder
wobei die wenigstens zwei Verliersicherungsarme (56) jeweils wenigstens einen radial nach außen gewölbten Bauchbereich und ein vorderes Zangenende (58) aufweisen; und/oder
wobei die wenigstens zwei Verliersicherungsarme (56) biegbar ausgebildet sind, insbesondere derart biegbar ausgebildet sind,
dass bei einer axial nach vorne gerichteten Betätigung der vorderen Zangenenden (58) der Verliersicherungsarme (56) durch einen durch die Längsöffnung (52) des Stiftkörpers (50) eingeschobenen Betätigungsstift (60) die Bauchbereiche (57) der Verliersicherungsarme (56) unter Verringerung des Durchmessers der Bauchbereiche (57) gestreckt werden; wobei sich der Durchmesser der Bauchbereiche (57) dabei insbesondere von einem größeren Durchmesser, der größer als der Innendurchmesser der Schraubenfeder (4) ist, zu einem kleineren Durchmesser, der kleiner als der Innendurchmesser der Schraubenfeder (4) ist, verringert.

9. Verwendung einer Federanordnung (2) zur verhakungsfreien Anordnung in einem Behältnis mit einer Vielzahl von anderen Federanordnungen, wobei die Federanordnung (2) folgende Merkmale aufweist:
eine Schraubenfeder (4) mit einem durch deren Federwindungen (6) gebildeten Innenraum; und
ein Verhakungsschutz-Element (14) zum Schutz vor einem Verhaken der Federanordnung (2) mit wenigstens einer weiteren Federanordnung (2) oder mit wenigstens einer anderen Schraubenfeder (4);
wobei das Verhakungsschutz-Element (14) teilweise in dem durch die Federwindungen (6) gebildeten Innenraum angeordnet ist und sich in Längsrichtung durch wenigstens einen Teil des Innenraums erstreckt, ein Eindringen der Windungen von angrenzenden Schraubenfedern (4) in den Innenraum verhindert und Windungen von benachbarten Schraubenfedern (4) am Verhakungsschutz-Element (14) anstoßen, zur Vermeidung, dass die Windungen von benachbarten Schraubenfedern (4) in Eingriff miteinander kommen und dadurch Schraubenfedern (4) miteinander verhaken; und
wobei das Verhakungsschutz-Element (14) als separat von der Schraubenfeder (4) ausgebildeter Verhakungsschutz-Bügel (14), insbesondere Verhakungsschutz-Drahtbügel, ausgebildet ist, der in dem Innenraum klemmend gehaltert ist;
wobei der Verhakungsschutz-Bügel (14) wenigstens zwei Bügelschenkel (16) mit jeweiligem Bügelende (20) und eine Bügelspange (18) aufweist, welche die wenigstens zwei Bügelschenkel (16) integral miteinander verbindet;
wobei der Verhakungsschutz-Bügel (14) so in dem durch die Federwindungen (6) gebildeten Innenraum der Schraubenfeder (4) klemmend gehaltert ist, dass die wenigstens zwei Bügelschenkel (16) an einer Mehrzahl der Innenseiten von Federwindungen (6) anliegen und dass eine nach außen gerichtete Klemmkraft auf die Innenseiten der Federwindungen (6) einwirkt; und
wobei der Verhakungsschutz-Bügel (14) so ausgebildet ist, dass die Bügelspange (18) die zwei Bügelschenkel (16) in der nicht in den durch die Federwindungen (6) gebildeten Innenraum eingebrachten Position so weit nach außen vorspannt, dass der Abstand zwischen den an den nach außen wegstehenden Bügelenden (20) angrenzenden Bereichen der Bügelschenkel (16) größer ist als der Innendurchmesser der Schraubenfeder (4);
wobei die Bügelenden (20) nach außen zu einer Öse (66) gebogen sind, unter Ausbildung eines Winkels von mindestens 180°, zu dem jeweiligen Bügelschenkel (16), so dass die Federdrahtenden in Richtung Bügelspange (18) gerichtet sind, zum Verhindern, dass die Bügelenden (16) selbst zu Verhakungen mit anderen Federanordnungen, anderen Verhakungsschutz-Bügeln oder anderen Schraubenfedern führen, und zum Verhindern einer Beschädigung eines Verpackungsmaterials, in welchem solche Verhakungsschutz-Bügel, Schraubenfedern und Federanordnungen transportiert werden.

10. Verwendung einer Federanordnung (46) zur verhakungsfreien Anordnung in einem Behältnis mit einer Vielzahl von anderen Federanordnungen, wobei die Federanordnung (2, 34, 46) folgende Merkmale aufweist:
eine Schraubenfeder (4) mit einem durch deren Federwindungen (6) gebildeten Innenraum; und
ein Verhakungsschutz-Element (14) zum Schutz vor einem Verhaken der Federanordnung (46) mit wenigstens einer weiteren Federanordnung (46) oder mit wenigstens einer anderen Schraubenfeder (4);
wobei das Verhakungsschutz-Element (14) teilweise in dem durch die Federwindungen (6) gebildeten Innenraum angeordnet ist und sich in Längsrichtung durch wenigstens einen Teil des Innenraums erstreckt, ein Eindringen der Windungen von angrenzenden Schraubenfedern (4) in den Innenraum verhindert und Windungen von benachbarten Schraubenfedern (4) am Verhakungsschutz-Element (14) anstoßen, zur Vermeidung, dass die Windungen von benachbarten Schraubenfedern (4) in Eingriff miteinander kommen und dadurch Schraubenfedern (4) miteinander verhaken; und
wobei das Verhakungsschutz-Element (48) als separat von der Schraubenfeder (4) ausgebildeter Verhakungsschutz-Kunststoffstift, ausgebildet ist, mit einem vorderen Verliersicherungs-Ende und mit einem hinteren Anschlagsende;
wobei der Verhakungsschutz-Stift (48) einen Stiftkörper (50) aufweist, dessen Durchmesser kleiner ist als der Innendurchmesser der Schraubenfeder (4) und der eine in axialer Richtung durch den Stiftkörper (50) verlaufende Längsöffnung (52) hat; und wobei der Stiftkörper (50) insbesondere rohrförmig ausgebildet ist;
wobei das vordere Verliersicherungs-Ende durch die Längsöffnung (52) des Stiftkörpers (50) betätigbar ausgebildet ist; und
wobei das hintere Anschlagsende als integral mit dem Stiftkörper (50) ausgebildeter, verbreiterter Einschubtiefe-Begrenzungs-Kragen (54) ausgebildet ist, dessen Durchmesser größer ist als der Innendurchmesser der Schraubenfeder (4).

11. Verfahren zum Einbringen eines Verhakungsschutz-Bügels (14) in einen Innenraum einer Schraubenfeder (4) zum Ausbilden einer Federanordnung (2, 34) für ein Behältnis mit einer Vielzahl von darin verhakungsfrei angeordneten Federanordnungen (2) nach einem der Ansprüche 1 bis 5, aufweisend die folgenden Schritte:
Bereitstellen einer Schraubenfeder (4) mit einem durch deren Federwindungen (4) gebildeten Innenraum;
Bereitstellen eines Verhakungsschutz-Bügels (14) mit wenigstens zwei Bügelschenkeln (16), mit einer Bügelspange (18), welche die wenigstens zwei Bügelschenkel (16) integral miteinander verbindet, und mit nach außen gerichteten Bügelenden (20), die an den Enden der Bügelschenkel (16) ansetzen;
Zusammendrücken der Bügelenden (20) in radialer Richtung, durch eine auf die Bügelenden (20) in radialer Richtung einwirkende Zusammendrückkraft, so weit, dass der Abstand zwischen den an den nach außen wegstehenden Bügelenden (20) angrenzenden Bereichen der Bügelschenkel (16) kleiner ist als oder gleich ist wie der Innendurchmesser der Schraubenfeder (4);
Einschieben des Verhakungsschutz-Bügels (14) in den Innenraum der Schraubenfeder (4), insbesondere so weit, dass die nach außen wegstehenden Bügelenden (20) an der ersten Windung der Schraubenfeder (4) anliegen und/oder dass die Bügelspange (18) radial innerhalb der letzten Windung oder einer der letzten Windungen der Schraubenfeder (4) angeordnet ist; und
Beenden des Zusammendrückens der Bügelenden (20).

12. Verfahren zum Entfernen des Verhakungsschutz-Bügels (14) aus dem Innenraum einer Schraubenfeder (4) bei einer Federanordnung (2, 34) für ein Behältnis mit einer Vielzahl von darin verhakungsfrei angeordneten Federanordnungen (2, 34) nach einem der Ansprüche 1 bis 5, aufweisend die folgenden Schritte:
Bereitstellen einer Federanordnung (2) für ein Behältnis mit einer Vielzahl von darin verhakungsfrei angeordneten Federanordnungen (2) nach einem der Ansprüche 1 bis 5;
Zusammendrücken der Bügelenden (20) in radialer Richtung, durch eine auf die Bügelenden (20) in radialer Richtung einwirkende Zusammendrückkraft, so weit, dass der Abstand zwischen den an den nach außen wegstehenden Bügelenden (20) angrenzenden Bereichen der Bügelschenkel (16) kleiner ist als der Innendurchmesser der Schraubenfeder (4);
Entfernen des Verhakungsschutz-Bügels (14) aus dem Innenraum der Schraubenfeder (4), insbesondere durch Fallenlassen der Schraubenfeder (4) infolge ihrer Schwerkraft; und
Beenden des Zusammendrückens der Bügelenden (20).

13. Verfahren zum Einbringen eines Verhakungsschutz-Stifts (48) in einen Innenraum einer Schraubenfeder (4) zum Ausbilden einer Federanordnung (46) für ein Behältnis mit einer Vielzahl von darin verhakungsfrei angeordneten Federanordnungen (48) nach einem der Ansprüche 6 bis 8, aufweisend die folgenden Schritte:
Bereitstellen einer Schraubenfeder (4) mit einem durch deren Federwindungen (6) gebildeten Innenraum;
Bereitstellen eines Verhakungsschutz-Stifts (48) mit einem Stiftkörper (50), dessen Durchmesser kleiner ist als der Innendurchmesser der Schraubenfeder (4) und der eine in axialer Richtung durch den Stiftkörper (50) verlaufende Längsöffnung (52) hat, mit einem vorderen Verliersicherungs-Ende, das durch die Längsöffnung (52) des Stiftkörpers (50) betätigbar ausgebildet ist; und mit einem hinteren Anschlagsende, das als integral mit dem Stiftkörper (50) ausgebildeter, verbreiterter Einschubtiefe-Begrenzungs-Kragen (54) ausgebildet ist, dessen Durchmesser größer ist als der Innendurchmesser der Schraubenfeder (4);
Betätigen des vorderen Verliersicherungs-Endes durch Einschieben eines Betätigungsstifts (60) durch die Längsöffnung (52) des Stiftkörpers (50) so, dass sich der Durchmesser des vorderen Verliersicherungs-Endes so verkleinert, dass er kleiner ist als der Innendurchmesser der Schraubenfeder (4);
Einschieben des Verhakungsschutz-Stifts (48) in den Innenraum der Schraubenfeder (4) oder Fallenlassen der Schraubenfeder (4) auf den Verhakungsschutz-Stift (48), insbesondere so weit, dass der verbreiterte Einschubtiefe-Begrenzungs-Kragen (54) an der hintersten Windung der Schraubenfeder (4) anliegt und/oder das vordere Verliersicherungs-Ende vor der vordersten Windung der Schraubenfeder (4) angeordnet ist; und
Beenden des Betätigens des vorderen Verliersicherungs-Endes durch Herausziehen des Betätigungsstifts (60) aus der Längsöffnung (52) des Stiftkörpers (50).

14. Verfahren zum Entfernen des Verhakungsschutz-Stifts (48) aus dem Innenraum einer Schraubenfeder (4) bei einer Federanordnung (46) für ein Behältnis mit einer Vielzahl von darin verhakungsfrei angeordneten Federanordnungen (48) nach einem der Ansprüche 6 bis 8, aufweisend die folgenden Schritte:
Bereitstellen einer Federanordnung (46) für ein Behältnis mit einer Vielzahl von darin verhakungsfrei angeordneten Federanordnungen (48) nach einem der Ansprüche 6 bis 8;
Betätigen des vorderen Verliersicherungs-Endes durch Einschieben eines Betätigungsstifts (60) durch die Längsöffnung (52) des Stiftkörpers (50) so, dass sich der Durchmesser des vorderen Verliersicherungs-Endes so verkleinert, dass er kleiner ist als der Innendurchmesser der Schraubenfeder (4); und
Herausziehen des Verhakungsschutz-Stifts (48) aus dem Innenraum der Schraubenfeder (4).

## Claims

1. A container comprising a plurality of spring assemblies (2) arranged therein without entanglement, each said spring assembly (2) comprising:
a coil spring (4) having an inner space formed by the spring windings (6, 38) thereof; and
an anti-entanglement element (14) for protection against entanglement of the spring assembly (2) with at least one further spring assembly (2) or with at least one other coil spring (4);
wherein the anti-entanglement element (14) is partially disposed in the inner space formed by the spring windings (6) and extends longitudinally through at least a portion of the inner space, and prevents entering of the windings of adjacent coil springs (4) into the inner space, and windings of adjacent coil springs (4) abut the anti-entanglement element (14) in order to avoid that the windings of adjacent coil springs (14) get into engagement with each other, thus causing coil springs (4) to get entangled with each other; and
wherein the anti-entanglement element (14) is provided in the form of an anti-entanglement stirrup (14), in particular an anti-entanglement wire stirrup, which is formed separately from the coil spring (4) and clampingly supported in the inner space;
wherein the anti-entanglement stirrup (14) has at least two stirrup legs (16) with a respective stirrup end (20), and a stirrup junction (18) integrally connecting the at least two stirrup legs (16);
wherein the anti-entanglement stirrup (14) is clampingly supported in the inner space of the coil spring (4) formed by the spring windings (6) such that the at least two stirrup legs (16) abut a plurality of the inner sides of spring windings (6) and that an outwardly directed clamping force acts on the inner sides of the spring windings (6); and
wherein the anti-entanglement stirrup (14) is formed such that the stirrup junction (18) biases the two stirrup legs (16), in the position not introduced into the inner space formed by the spring windings (6), outwardly to such an extent that the distance between the portions of the stirrup legs (16) adjoining the outwardly projecting stirrup ends (20) is greater than the inner diameter of the coil spring (4);
**characterized in that**
the stirrup ends (20) are bent outwardly to form an eyelet (66), forming an angle of at least 180° with respect to the respective stirrup leg (16) so that the spring wire ends are directed towards the stirrup junction (18), for preventing that the stirrup ends (16) themselves lead to entanglements with other spring assemblies, other anti-entanglement stirrups or other coil springs, and for preventing damage to a packaging material in which such anti-entanglement stirrups, coil springs and spring assemblies are transported.

2. The container comprising a plurality of spring assemblies (2) arranged therein without entanglement, according to claim 1,
wherein at least one of the stirrup legs (16) of the anti-entanglement stirrup (68, 76, 80, 82) is formed with at least one nose (70), with at least one bead (78), and/or with at least one step (84).

3. The container comprising a plurality of spring assemblies (2) arranged therein without entanglement, according to claim 2,
wherein the anti-entanglement stirrup (14) of a respective spring assembly (2) is clampingly supported in the inner space of the coil spring (4) formed by the spring windings (6) such that
the axis of symmetry of the coil spring (4) and the axis of symmetry constitute a common axis.

4. The container comprising a plurality of spring assemblies (2) arranged therein without entanglement, according to claim 2 or 3,
wherein the anti-entanglement stirrup (14) of a respective spring assembly (2) comprises two stirrup legs (16) with a respective stirrup end, and a stirrup junction (18) integrally connecting the two stirrup legs (16); and
wherein the anti-entanglement stirrup (14) is designed such that by a compressive force acting on the outwardly projecting stirrup ends (20) in the radial direction for introducing the anti-entanglement stirrup (14) into the inner space and for removing the anti-entanglement stirrup (14) from the inner space, the two stirrup legs (16) can be compressed in the radial direction to such an extent that the distance between the portions of the stirrup legs (16) adjoining the outwardly projecting stirrup ends (20) is smaller than the inner diameter of the coil spring (4).

5. The container comprising a plurality of spring assemblies (2) arranged therein without entanglement, according to any of claims 2 to 4,
wherein the anti-entanglement stirrup (14) of a respective spring assembly (2) extends so far into the inner space of the coil spring (4) formed by the spring windings (6)
that the outwardly projecting stirrup ends (20) abut the first winding of the coil spring (4), and/or
that the stirrup junction (18) is arranged radially inside the last winding or one of the last windings of the coil spring (4).

6. A container comprising a plurality of spring assemblies (46) arranged therein without entanglement, each said spring assembly (46) comprising:
a coil spring (4) having an inner space formed by the spring windings (6) thereof; and
an anti-entanglement element (48) for protection against entanglement of the spring assembly (46) with at least one further spring assembly (46) or with at least one other coil spring (4);
wherein the anti-entanglement element (48) is partially disposed in the inner space formed by the spring windings (6) and extends longitudinally through at least a portion of the inner space, and prevents entering of the windings of adjacent coil springs (4) into the inner space, and windings of adjacent coil springs (4) abut the anti-entanglement element (48) in order to avoid that the windings of adjacent coil springs (4) get into engagement with each other, thus causing coil springs (4) to get entangled with each other;
**characterized in that**
the anti-entanglement element (48) is provided in the form of an anti-entanglement plastic pin which is formed separately from the coil spring (4) and has a front captive end and a rear stop end,
wherein the anti-entanglement pin (48) has a pin body (50) having a diameter that is smaller than the inner diameter of the coil spring (4), and having a longitudinal opening (52) extending in axial direction through the pin body (50); and
wherein the pin body (50) is in particular tubular;
wherein the front captive end is formed to permit actuation thereof through the longitudinal opening (52) of the pin body (50); and
wherein the rear stop end is designed as a broadened insertion-depth limiting collar (54) formed integrally with the pin body (50) and having a diameter which is greater than the inner diameter of the coil spring (4).

7. The container comprising a plurality of spring assemblies (46) arranged therein without entanglement, according to claim 6,
wherein the diameter of the front captive end in the unactuated state is greater than the inner diameter of the coil spring (4); and/or
wherein the diameter of the front captive end is variable, in particular by actuation with an actuating pin (60) inserted through the longitudinal opening (52) of the pin body (50); and/or
wherein the front captive end can be actuated by an actuating pin (60) inserted through the longitudinal opening (52) of the pin body (50), such that the diameter of the front captive end decreases such that it is smaller than the inner diameter the coil spring (4).

8. The container comprising a plurality of spring assemblies (46) arranged therein without entanglement, according to claim 7,
wherein the front captive end comprises at least two loss-prevention arms (56) which are arranged beginning at the front end of the pin body (50) and in particular are formed integrally therewith; and/or
wherein the at least two loss-prevention arms (56) each have at least one radially outwardly curved bulge portion and a front forceps end (58); and/or wherein the at least two loss-prevention arms (56) are designed to be bendable, in particular bendable such
that in case of an axially forwardly directed actuation of the front forceps ends (58) of the loss-prevention arms (56) by way of an actuating pin (60) introduced through the longitudinal opening (52) of the pin body (50), the bulge portions (57) of the loss-prevention arms (56) are stretched, thereby reducing the diameter of the bulge portions (57); wherein, in doing so, the diameter of the bulge portions (57) decreases from a larger diameter which is greater than the inner diameter of the coil spring (4) to a smaller diameter which is smaller than the inner diameter of the coil spring (4).

9. The use of a spring assembly (2) for arrangement thereof without entanglement in a container comprising a plurality of other spring assemblies, said spring assembly (2) comprising:
a coil spring (4) having an inner space formed by the spring windings (6) thereof; and
an anti-entanglement element (14) for protection against entanglement of the spring assembly (2) with at least one further spring assembly (2) or with at least one other coil spring (4);
wherein the anti-entanglement element (14) is partially disposed in the inner space formed by the spring windings (6) and extends longitudinally through at least a portion of the inner space, and prevents entering of the windings of adjacent coil springs (4) into the inner space, and windings of adjacent coil springs (4) abut the anti-entanglement element (14) in order to avoid that the windings of adjacent coil springs (4) get into engagement with each other, thus causing coil springs (4) to get entangled with each other; and
wherein the anti-entanglement element (14) is provided in the form of an anti-entanglement stirrup (14), in particular an anti-entanglement wire stirrup, which is formed separately from the coil spring (4) and clampingly supported in the inner space;
wherein the anti-entanglement stirrup (14) has at least two stirrup legs (16) with a respective stirrup end (20), and a stirrup junction (18) integrally connecting the at least two stirrup legs (16);
wherein the anti-entanglement stirrup (14) is clampingly supported in the inner space of the coil spring (4) formed by the spring windings (6) such that the at least two stirrup legs (16) abut a plurality of the inner sides of spring windings (6) and that an outwardly directed clamping force acts on the inner sides of the spring windings (6); and
wherein the anti-entanglement stirrup (14) is formed such that the stirrup junction (18) biases the two stirrup legs (16), in the position not introduced into the inner space formed by the spring windings (6), outwardly to such an extent that the distance between the portions of the stirrup legs (16) adjoining the outwardly projecting stirrup ends (20) is greater than the inner diameter of the coil spring (4);
wherein the stirrup ends (20) are bent outwardly to form an eyelet (66), forming an angle of at least 180° with respect to the respective stirrup leg (16) so that the spring wire ends are directed towards the stirrup junction (18), for preventing that the stirrup ends (16) themselves lead to entanglements with other spring assemblies, other anti-entanglement stirrups or other coil springs, and for preventing damage to a packaging material in which such anti-entanglement stirrups, coil springs and spring assemblies are transported.

10. The use of a spring assembly (46) for arrangement thereof without entanglement in a container comprising a plurality of other spring assemblies, said spring assembly (2, 34, 46) comprising:
a coil spring (4) having an inner space formed by the spring windings (6) thereof; and
an anti-entanglement element (14) for protection against entanglement of the spring assembly (46) with at least one further spring assembly (46) or with at least one other coil spring (4);
wherein the anti-entanglement element (14) is partially disposed in the inner space formed by the spring windings (6) and extends longitudinally through at least a portion of the inner space, and prevents entering of the windings of adjacent coil springs (4) into the inner space, and windings of adjacent coil springs (4) abut the anti-entanglement element (14) in order to avoid that the windings of adjacent coil springs (4) get into engagement with each other, thus causing coil springs (4) to get entangled with each other; and
wherein the anti-entanglement element (48) is provided in the form of an anti-entanglement plastic pin which is formed separately from the coil spring (4) and has a front captive end and a rear stop end;
wherein the anti-entanglement pin (48) has a pin body (50) having a diameter that is smaller than the inner diameter of the coil spring (4), and having a longitudinal opening (52) extending in axial direction through the pin body (50); and
wherein the pin body (50) is in particular tubular;
wherein the front captive end is formed to permit actuation thereof through the longitudinal opening (52) of the pin body (50); and
wherein the rear stop end is designed as a broadened insertion-depth limiting collar (54) formed integrally with the pin body (50) and having a diameter which is greater than the inner diameter of the coil spring (4).

11. A method for introducing an anti-entanglement stirrup (14) into an inner space of a coil spring (4) for forming a spring assembly (2, 34) for a container comprising a plurality of spring assemblies (2) arranged therein without entanglement, according to any of claims 1 to 5, comprising the steps of:
providing a coil spring (4) having an inner space formed by the spring windings (4) thereof;
providing an anti-entanglement stirrup (14) having at least two stirrup legs (16), a stirrup junction (18) integrally connecting the at least two stirrup legs (16) to each other, and outwardly directed stirrup ends (20) disposed beginning at the ends of the stirrup legs (16);
compressing the stirrup ends (20) in the radial direction by a compressive force acting on the stirrup ends (20) in the radial direction, to such an extent that the distance between the portions of the stirrup legs (16) adjoining the outwardly projecting stirrup ends (20) is less than or equal to the inner diameter of the coil spring (4);
inserting the anti-entanglement stirrup (14) into the inner space of the coil spring (4), in particular to such an extent that the outwardly projecting stirrup ends (20) abut the first winding of the coil spring (4) and/or such that the stirrup junction (18) is disposed radially within the last winding or one of the last windings of the coil spring (4); and
terminating the compression of the stirrup ends (20).

12. A method for removing the anti-entanglement stirrup (14) from the inner space of a coil spring (4) in a spring assembly (2, 34) for a container comprising a plurality of spring assemblies (2, 34) arranged therein without entanglement, according to any of claims 1 to 5, comprising the steps of:
providing a spring assembly (2) for a container comprising a plurality of spring assemblies (2) arranged therein without entanglement, according to any of claims 1 to 5;
compressing the stirrup ends (20) in the radial direction by a compressive force acting on the stirrup ends (20) in the radial direction, to such an extent that the distance between the portions of the stirrup legs (16) adjoining the outwardly projecting stirrup ends (20) is smaller than the inner diameter of the coil spring (4);
removing the anti-entanglement stirrup (14) from the inner space of the coil spring (4), in particular by dropping the coil spring (4) due to its gravity; and
terminating the compression of the stirrup ends (20).

13. A method for introducing an anti-entanglement pin (48) into an inner space of a coil spring (4) for forming a spring assembly (48) for a container comprising a plurality of spring assemblies (48) arranged therein without entangiement, according to any of claims 6 to 8, comprising the steps of:
providing a coil spring (4) having an inner space formed by the spring windings (6) thereof;
providing an anti-entanglement pin (48) having a pin body (50) whose diameter is smaller than the inner diameter of the coil spring (4) and which has a longitudinal opening (52) extending axially through the pin body (50), having a front captive end which is adapted to be actuated through the longitudinal opening (52) of the pin body (50); and having a rear stop end formed as a broadened insertion-depth limiting collar (54) formed integrally with the pin body (50) and having a diameter which is larger than the inner diameter of the coil spring (4);
actuating the front captive end by inserting an actuating pin (60) through the longitudinal opening (52) of the pin body (50) such that the diameter of the front captive end decreases such that it is smaller than the inner diameter of the coil spring (4);
inserting the anti-entanglement pin (48) into the inner space of the coil spring (4) or dropping the coil spring (4) onto the anti-entanglement pin (48), in particular so far that the broadened insertion-depth limiting collar (54) abuts the rearmost winding of the coil spring (4) and/or the front captive end is arranged in front of the foremost winding of the coil spring (4); and terminating the actuation of the front captive end by withdrawing the actuating pin (60) from the longitudinal opening (52) of the pin body (50).

14. A method for removing the anti-entanglement pin (48) from the inner space of a coil spring (4) in a spring assembly (46) for a container comprising a plurality of spring assemblies (48) arranged therein without entanglement, according to any of claims 6 to 8, comprising the steps of:
providing a spring assembly (46) for a container comprising a plurality of spring assemblies (48) arranged therein without entanglement, according to any of claims 6 to 8;
actuating the front captive end by inserting an actuating pin (60) through the longitudinal opening (52) of the pin body (50) such that the diameter of the front captive end decreases such that it is smaller than the inner diameter of the coil spring (4); and
withdrawing the anti-entanglement pin (48) from the inner space of the coil spring (4).

## Revendications

1. Récipient comportant une pluralité de ressorts disposés de manière à ne pas s'accrocher (2), les dispositifs de ressorts (2) présentant les caractéristiques suivantes :
un ressort hélicoïdal (4) avec un espace intérieur formé par ses spires (6, 38) ; et
un élément anti-accrochage (14) empêchant le dispositif de ressort (2) de s'accrocher avec au moins un autre dispositif de ressort (2) ou avec au moins un autre ressort hélicoïdal (4) ;
dans lequel l'élément anti-accrochage (14) est disposé partiellement dans l'espace intérieur formé par les spires (6) du ressort et s'étend dans le sens longitudinal à travers au moins une partie de l'espace intérieur, empêche toute pénétration des spires de ressorts hélicoïdaux (4) adjacents dans l'espace intérieur et où les spires de ressorts hélicoïdaux (4) adjacents butent contre l'élément anti-accrochage afin d'empêcher les spires de ressorts hélicoïdaux (4) adjacents de s'engager les unes dans les autres entraînant l'accrochage des ressorts hélicoïdaux (4) entre eux ; et
dans lequel l'élément anti-accrochage (14) a la forme d'un étrier anti-accrochage (14) réalisé indépendamment du ressort hélicoïdal (4), en particulier d'un étrier anti-accrochage en fil métallique qui est maintenu par serrage dans l'espace intérieur ;
dans lequel l'étrier anti-accrochage (14) présente au moins deux branches (16) avec chacune une extrémité (20), ains qu'un coude (18) qui relie intégralement les branches (16), deux au moins ;
dans lequel l'étrier anti-accrochage (14) est maintenu par serrage dans l'espace intérieur formé par les spires (6) du ressort hélicoïdal (4) de telle sorte que les branches (16), deux au moins, sont en contact avec une pluralité de faces intérieures des spires (6) du ressort et qu'une force de serrage dirigée vers l'extérieur agit sur les faces intérieures des spires (6) du ressort ; et
dans lequel l'étrier anti-accrochage (14) est réalisé de telle sorte que le coude d'étrier (18) précontraint les deux branches d'étrier (16) vers l'extérieur dans la position non introduite dans l'espace intérieur formé par les spires (6) du ressort de telle sorte que la distance entre les zones des branches d'étrier (16) adjacentes aux extrémités d'étrier (20) tournées vers l'extérieur est supérieure au diamètre intérieur du ressort hélicoïdal (4) ;
**caractérisé en ce que**
les extrémités d'étrier (20) sont courbées vers l'extérieur en oeillet (66) formé selon un angle d'au moins 180° par rapport à la branche d'étrier (16) respective, de telle sorte que
les extrémités des fils métalliques du ressort sont orientées vers le coude d'étrier (18), afin d'empêcher les extrémités d'étrier (16) de provoquer elles-mêmes des accrochages avec d'autres dispositifs de ressorts, d'autres étriers anti-accrochage ou d'autres ressorts hélicoïdaux et pour empêcher l'endommagement d'un matériau d'emballage dans lequel de tels étriers anti-accrochage, ressorts hélicoïdaux et dispositifs de ressorts sont transportés.

2. Le récipient comportant une pluralité de ressorts disposés de manière à ne pas s'accrocher (2) selon la revendication 1,
dans lequel au moins une des branches (16) de l'étrier anti-accrochage (68, 76, 80, 82) est réalisée avec au moins un nez (70), avec au moins une moulure (78), et/ou avec au moins un palier (84).

3. Le récipient comportant une pluralité de ressorts disposés de manière à ne pas s'accrocher (2) selon la revendication 2,
dans lequel l'étrier anti-accrochage (14) d'un dispositif de ressort (2) est maintenu par serrage dans l'espace intérieur formé par les spires (6) du ressort hélicoïdal (4) de telle sorte que l'axe de symétrie du ressort hélicoïdal (4) et l'axe de symétrie forment un axe commun.

4. Le récipient comportant une pluralité de ressorts disposés de manière à ne pas s'accrocher (2) selon la revendication 2 ou 3,
dans lequel l'étrier anti-accrochage (14) d'un dispositif de ressort (2) présente deux branches (16) avec chacune une extrémité, ainsi qu'un coude (18) qui relie intégralement les deux branches (16) ; et
dans lequel l'étrier anti-accrochage (14) est réalisé de telle sorte que, par une force de compression agissant en direction radiale sur les extrémités d'étrier (20) tournées vers l'extérieur, que ce soit pour introduire l'étrier anti-accrochage (14) dans l'espace intérieur ou pour retirer l'étrier anti-accrochage (14) de l'espace intérieur, les deux branches d'étrier (16) peuvent être comprimées en direction radiale jusqu'à ce que la distance entre les zones des branches d'étrier (16) adjacentes aux extrémités d'étrier (20) tournées vers l'extérieur soit inférieure au diamètre intérieur du ressort hélicoïdal (4).

5. Le récipient comportant une pluralité de ressorts disposés de manière à ne pas s'accrocher (2) selon l'une quelconque des revendications 2 à 4,
dans lequel l'étrier anti-accrochage (14) d'un dispositif de ressort (2) s'étend dans l'espace intérieur formé par les spires (6) du ressort hélicoïdal (4) de telle sorte
que les extrémités d'étrier (20) tournées vers l'extérieur sont en contact avec la première spire du ressort hélicoïdal (4), et/ou
que le coude (18) est disposé radialement dans la dernière spire ou dans l'une des dernières spires du ressort hélicoïdal (4).

6. Récipient comportant une pluralité de ressorts disposés de manière à ne pas s'accrocher (46), les dispositifs de ressorts (46) présentant les caractéristiques suivantes :
un ressort hélicoïdal (4) avec un espace intérieur formé par ses spires (6) ; et
un élément anti-accrochage (48) empêchant le dispositif de ressort (46) de s'accrocher avec au moins un autre dispositif de ressort (46) ou avec au moins un autre ressort hélicoïdal (4) ;
dans lequel l'élément anti-accrochage (48) est disposé partiellement dans l'espace intérieur formé par les spires (6) du ressort et s'étend dans le sens longitudinal à travers au moins une partie de l'espace intérieur, empêche toute pénétration des spires de ressorts hélicoïdaux (4) adjacents dans l'espace intérieur et où les spires de ressorts hélicoïdaux (4) adjacents butent contre l'élément anti-accrochage (48) afin d'empêcher les spires de ressorts hélicoïdaux (4) adjacents de s'engager les unes dans les autres entraînant l'accrochage des ressorts hélicoïdaux (4) entre eux ;
**caractérisé en ce que**
l'élément anti-accrochage (48) a la forme d'une broche en plastique réalisée indépendamment du ressort hélicoïdal (4), avec une extrémité avant de retenue et une extrémité arrière de butée,
dans lequel la broche anti-accrochage (48) présente un corps de broche (50) dont le diamètre est inférieur au diamètre intérieur du ressort hélicoïdal (4) et qui possède une ouverture longitudinale en direction axiale s'étendant à travers le corps de broche (50) ; et où, en particulier, le corps de broche (50) est réalisé en forme de tube ;
dans lequel l'extrémité avant de retenue est réalisée de manière à être actionnable par l'ouverture longitudinale (52) du corps de broche (50) ; et
dans lequel l'extrémité arrière de butée est réalisée d'un seul tenant avec le corps de broche (50) sous forme de collerette de limitation de la profondeur d'insertion élargie (54) dont le diamètre est supérieur au diamètre intérieur du ressort hélicoïdal (4).

7. Le récipient comportant une pluralité de ressorts disposés de manière à ne pas s'accrocher (46) selon la revendication 6,
dans lequel le diamètre de l'extrémité avant de retenue, lorsqu'elle n'est pas actionnée, est supérieur au diamètre intérieur du ressort hélicoïdal (4) ; et/ou
dans lequel le diamètre de l'extrémité avant de retenue est modifiable, en particulier par l'actionnement avec une tige d'actionnement (60) insérée par l'ouverture longitudinale (52) du corps de broche (50) ; et/ou
dans lequel l'extrémité avant de retenue peut être actionnée par une tige d'actionnement (60) insérée par l'ouverture longitudinale (52) du corps de broche (50) de telle sorte que le diamètre de l'extrémité avant de retenue se réduit au point d'être inférieur au diamètre intérieur du ressort hélicoïdal (4).

8. Le récipient comportant une pluralité de ressorts disposés de manière à ne pas s'accrocher (46) selon la revendication 7,
dans lequel l'extrémité avant de retenue présente au moins deux bras de retenue (56) qui débutent à l'extrémité avant du corps de broche (50) et sont en particulier formés d'un seul tenant avec celui-ci ; et/ou
dans lequel les bras de retenue (56), deux au moins, présentent chacun au moins une zone ventrale bombée vers l'extérieur et une extrémité avant en pince (58) ; et/ou
dans lequel les bras de retenue (56), deux au moins, sont réalisés de manière à être flexibles, en particulier flexibles de telle sorte que,
lors d'un actionnement orienté axialement vers l'avant des extrémités avant en pince (58) des bras de retenue (56) par une tige d'actionnement (60) insérée par l'ouverture longitudinale (52) du corps de broche (50), les zones ventrales (57) des bras de retenue (56) sont étirées, entraînant une réduction du diamètre des zones ventrales ; sachant que le diamètre des zones ventrales (57) diminue en particulier pour passer d'un diamètre plus grand, qui est supérieur au diamètre intérieur du ressort hélicoïdal (4) à un diamètre plus petit, qui est inférieur au diamètre intérieur du ressort hélicoïdal (4).

9. Utilisation d'un dispositif de ressort (2) disposé de manière à ne pas s'accrocher dans un récipient comportant une pluralité d'autres dispositifs de ressorts, le dispositif de ressort (2) présentant les caractéristiques suivantes :
un ressort hélicoïdal (4) avec un espace intérieur formé par ses spires (6) ; et
un élément anti-accrochage (14) empêchant le dispositif de ressort (2) de s'accrocher avec au moins un autre dispositif de ressort (2) ou avec au moins un autre ressort hélicoïdal (4) ;
dans lequel l'élément anti-accrochage (14) est disposé partiellement dans l'espace intérieur formé par les spires (6) du ressort et s'étend dans le sens longitudinal à travers au moins une partie de l'espace intérieur, empêche toute pénétration des spires
de ressorts hélicoïdaux (4) adjacents dans l'espace intérieur et où les spires de ressorts hélicoïdaux (4) adjacents butent contre l'élément anti-accrochage (14) afin d'empêcher les spires de ressorts hélicoïdaux (4) adjacents de s'engager les unes dans les autres entraînant l'accrochage des ressorts hélicoïdaux (4) entre eux ; et
dans lequel l'élément anti-accrochage (14) a la forme d'un étrier anti-accrochage (14) réalisé indépendamment du ressort hélicoïdal (4), en particulier d'un étrier anti-accrochage en fil métallique qui est maintenu par serrage dans l'espace intérieur ;
dans lequel l'étrier anti-accrochage (14) présente au moins deux branches (16) avec chacune une extrémité (20), ainsi qu'un coude (18) qui relie intégralement les branches (16), deux au moins ;
dans lequel l'étrier anti-accrochage (14) est maintenu par serrage dans l'espace intérieur formé par les spires (6) du ressort hélicoïdal (4) de telle sorte que les branches (16), deux au moins, sont en contact avec une pluralité de faces intérieures des spires (6) du ressort et qu'une force de serrage dirigée vers l'extérieur agit sur les faces intérieures des spires (6) du ressort ; et
dans lequel l'étrier anti-accrochage (14) est réalisé de telle sorte que le coude d'étrier (18) précontraint les deux branches d'étrier (16) vers l'extérieur dans la position non introduite dans l'espace intérieur formé par les spires (6) du ressort de telle sorte que la distance entre les zones des branches d'étrier (16) adjacentes aux extrémités d'étrier (20) tournées vers l'extérieur est supérieure au diamètre intérieur du ressort hélicoïdal (4) ;
dans lequel les extrémités d'étrier (20) sont courbées vers l'extérieur en oeillet (66) formé selon un angle d'au moins 180° par rapport à la branche d'étrier (16) respective, de telle sorte que les extrémités des fils du ressort sont orientées vers le coude d'étrier (18), afin d'empêcher les extrémités d'étrier (16) de provoquer elles-mêmes des accrochages avec d'autres dispositifs de ressorts, d'autres étriers anti-accrochage ou d'autres ressorts hélicoïdaux et pour empêcher l'endommagement d'un matériau d'emballage dans lequel de tels étriers anti-accrochage, ressorts hélicoïdaux et dispositifs de ressorts sont transportés.

10. Utilisation d'un dispositif de ressort (46) disposé de manière à ne pas s'accrocher dans un récipient comportant une pluralité d'autres dispositifs de ressorts, le dispositif de ressort (2, 34, 46) présentant les caractéristiques suivantes :
un ressort hélicoïdal (4) avec un espace intérieur formé par ses spires (6) ; et
un élément anti-accrochage (14) empêchant le dispositif de ressort (46) de s'accrocher avec au moins un autre dispositif de ressort (46) ou avec au moins un autre ressort hélicoïdal (4) ;
dans lequel l'élément anti-accrochage (14) est disposé partiellement dans l'espace intérieur formé par les spires (6) du ressort et s'étend dans le sens longitudinal à travers au moins une partie de l'espace intérieur, empêche toute pénétration des spires de ressorts hélicoïdaux (4) adjacents dans l'espace intérieur et où les spires de ressorts hélicoïdaux (4) adjacents butent contre l'élément anti-accrochage (14) afin d'empêcher les spires de ressorts hélicoïdaux (4) adjacents de s'engager les unes dans les autres entraînant l'accrochage des ressorts hélicoïdaux (4) entre eux ; et
dans lequel l'élément anti-accrochage (48) a la forme d'une broche en plastique réalisée indépendamment du ressort hélicoïdal (4), avec une extrémité avant de retenue et une extrémité arrière de butée ;
dans lequel la broche anti-accrochage (48) présente un corps de broche (50) dont le diamètre est inférieur au diamètre intérieur du ressort hélicoïdal (4) et qui possède une ouverture longitudinale (52) en direction axiale s'étendant à travers le corps de broche (50) ; et où, en particulier, le corps de broche (50) est réalisé en forme de tube ;
dans lequel l'extrémité avant de retenue est réalisée de manière à être actionnable par l'ouverture longitudinale (52) du corps de broche (50) ; et
dans lequel l'extrémité arrière de butée est réalisée d'un seul tenant avec le corps de broche (50) sous forme de collerette de limitation de la profondeur d'insertion élargie (54) dont le diamètre est supérieur au diamètre intérieur du ressort hélicoïdal (4).

11. Le procédé d'insertion d'un étrier anti-accrochage (14) dans l'espace intérieur d'un ressort hélicoïdal (4) pour former un dispositif de ressort (2, 34) pour un récipient comportant une pluralité de ressorts (2) disposés de manière à ne pas s'accrocher selon l'une quelconque des revendications 1 à 5, présentant les étapes suivantes :
Mise à disposition d'un ressort hélicoïdal (4) avec un espace intérieur formé par ses spires (6) ;
Mise à disposition d'un étrier anti-accrochage (14) avec au moins deux branches (16), un coude (18) qui relie intégralement les branches (16), deux au moins, et des extrémités d'étrier (20) tournées vers l'extérieur qui débutent aux extrémités des branches d'étrier (16) ;
Compression des extrémités d'étrier (20) en direction radiale, par une force de compression agissant en direction radiale sur les extrémités d'étrier (20), jusqu'à ce que la distance entre les zones des branches d'étrier (16) adjacentes aux extrémités d'étrier (20) tournées vers l'extérieur soit inférieure ou égale au diamètre intérieur du ressort hélicoïdal (4) ;
Insertion de l'étrier anti-accrochage (14) dans l'espace intérieur du ressort hélicoïdal (4), en particulier jusqu'à ce que les extrémités d'étrier (20) tournées vers l'extérieur soient en contact avec la première spire du ressort hélicoïdal (4) et/ou que
le coude (18) soit disposé radialement dans la dernière spire ou dans l'une des dernières spires du ressort hélicoïdal (4) ; et
Arrêt de la compression des extrémités d'étrier (20).

12. Le procédé de retrait d'un étrier anti-accrochage (14) de l'espace intérieur du ressort hélicoïdal (4) d'un dispositif de ressort (2, 34) pour un récipient comportant une pluralité de ressorts (2, 34) disposés de manière à ne pas s'accrocher selon l'une quelconque des revendications 1 à 5, présentant les étapes suivantes :
Mise à disposition d'un dispositif de ressort (2) pour un récipient comportant une pluralité de ressorts (2) disposés de manière à ne pas s'accrocher selon l'une quelconque des revendications 1 à 5 ;
Compression des extrémités d'étrier (20) en direction radiale, par une force de compression agissant en direction radiale sur les extrémités d'étrier (20), jusqu'à ce que la distance entre les zones des branches d'étrier (16) adjacentes aux extrémités d'étrier (20) tournées vers l'extérieur soit inférieure au diamètre intérieur du ressort hélicoïdal (4) ;
Retrait de l'étrier anti-accrochage (14) de l'espace intérieur du ressort hélicoïdal (4), en particulier en laissant tomber le ressort hélicoïdal (4) sous l'effet de sa gravité ; et
Arrêt de la compression des extrémités d'étrier (20).

13. Le procédé d'insertion d'une broche anti-accrochage (48) dans l'espace intérieur d'un ressort hélicoïdal (4) pour former un dispositif de ressort (46) pour un récipient comportant une pluralité de ressorts (48) disposés de manière à ne pas s'accrocher selon l'une quelconque des revendications 6 à 8, présentant les étapes suivantes :
Mise à disposition d'un ressort hélicoïdal (4) avec un espace intérieur formé par ses spires (6) ;
Mise à disposition d'une broche anti-accrochage (48) avec un corps de broche (50) dont le diamètre est inférieur au diamètre intérieur du ressort hélicoïdal (4) et qui possède une ouverture longitudinale (52) en direction axiale s'étendant à travers le corps de broche (50), avec une extrémité avant de retenue réalisée de manière à pouvoir être actionnée par l'ouverture longitudinale (52) du corps de broche (50) ; et avec une extrémité arrière de butée, réalisée d'un seul tenant avec le corps de broche (50), sous forme de collerette de limitation de la profondeur d'insertion élargie (54) dont le diamètre est supérieur au diamètre intérieur du ressort hélicoïdal (4) ;
Actionnement de l'extrémité avant de retenue en insérant une tige d'actionnement (60) par l'ouverture longitudinale (52) du corps de broche (50) de telle sorte que le diamètre de l'extrémité avant de retenue se réduit au point d'être inférieur au diamètre intérieur du ressort hélicoïdal (4) ;
Insertion de la broche anti-accrochage (48) dans l'espace intérieur du ressort hélicoïdal (4) ou lâchage du ressort hélicoïdal (4) sur la broche anti-accrochage (48), en particulier jusqu'à ce que la collerette de limitation de la profondeur d'insertion élargie (54) vienne buter contre la spire la plus à l'arrière du ressort hélicoïdal (4) et/ou l'extrémité avant de retenue soit disposée avant la spire la plus à l'avant du ressort hélicoïdal (4) ; et
Arrêt de l'actionnement de l'extrémité avant de retenue en retirant la tige d'actionnement (60) de l'ouverture longitudinale (52) du corps de broche (50).

14. Le procédé de retrait de la broche anti-accrochage (48) de l'espace intérieur du ressort hélicoïdal (4) d'un dispositif de ressort (46) pour un récipient comportant une pluralité de ressorts (48) disposés de manière à ne pas s'accrocher selon l'une quelconque des revendications 6 à 8, présentant les étapes suivantes :
Mise à disposition d'un dispositif de ressort (46) pour un récipient comportant une pluralité de ressorts (48) disposés de manière à ne pas s'accrocher selon l'une quelconque des revendications 6 à 8 ;
Actionnement de l'extrémité avant de retenue en insérant une tige d'actionnement (60) par l'ouverture longitudinale (52) du corps de broche (50) de telle sorte que le diamètre de l'extrémité avant de retenue se réduit au point d'être inférieur au diamètre intérieur du ressort hélicoïdal (4) ; et
Retrait de la broche anti-accrochage (48) de l'espace intérieur du ressort hélicoïdal (4).
